(19) **Europäisches Patentamt European Patent Office Office européen des brevets**

(11) **EP 4 564 968 A1**

(12) **EUROPEAN PATENT APPLICATION**
published in accordance with Art. 153(4) EPC

(43) Date of publication:
04.06.2025 Bulletin 2025/23

(21) Application number: 23851948.2

(22) Date of filing: 10.08.2023

(51) International Patent Classification (IPC):
*H04W 72/04* (2023.01)

(52) Cooperative Patent Classification (CPC):
H04W 72/04

(86) International application number:
PCT/CN2023/112286

(87) International publication number:
WO 2024/032727 (15.02.2024 Gazette 2024/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 12.08.2022 CN 202210970215

(71) Applicant: Huawei Technologies Co., Ltd.
Shenzhen, Guangdong 518129 (CN)

(72) Inventors:
• LU, Shaozhong
  Shenzhen, Guangdong 518129 (CN)
• GUO, Zhiheng
  Shenzhen, Guangdong 518129 (CN)
• SONG, Xinghua
  Shenzhen, Guangdong 518129 (CN)
• LIU, Yunfeng
  Shenzhen, Guangdong 518129 (CN)

(74) Representative: Epping - Hermann - Fischer
Patentanwaltsgesellschaft mbH
Schloßschmidstraße 5
80639 München (DE)

(54) **RESOURCE CONFIGURATION METHOD AND COMMUNICATION APPARATUS**

(57) Disclosed are a resource configuration method and a communication apparatus. The resource configuration method includes: A network device sends first signaling and second signaling to a terminal device. The first signaling includes cell-level uplink-downlink slot configuration information of a first cell in which the terminal device is located. The second signaling indicates a terminal device supporting SBFD to configure types of all symbols in a first slot configuration periodicity by using the first signaling, or the second signaling indicates a terminal device supporting SBFD to configure the types of all the symbols in the first slot configuration periodicity by using a first configuration policy. The first configuration policy is an uplink-downlink slot configuration policy dedicated to a terminal device supporting SBFD. The method implements a unified design of uplink-downlink slot configurations for a terminal device supporting SBFD and for a terminal device not supporting SBFD. This resolves a problem that an existing network device supporting SBFD is incompatible with uplink-downlink slot configurations for a terminal device supporting SBFD and for a terminal device not supporting SBFD.

FIG. 4

## Description

This application claims priority to Chinese Patent Application No. 202210970215.0, filed with the China National Intellectual Property Administration on August 12, 2022 and entitled "RESOURCE CONFIGURATION METHOD AND COMMUNICATION APPARATUS", which is incorporated herein by reference in its entirety.

## TECHNICAL FIELD

Embodiments of this application relate to the communication field, and more specifically, to a resource configuration method and a communication apparatus.

## BACKGROUND

With rapid development of new radio (new radio, NR) in a fifth generation mobile communication technology, various communication requirements emerge. To meet requirements of emerging services, a subband full duplex (subband non-overlapping full duplex, SBFD) solution is proposed to improve uplink coverage of a time division duplex (time division duplex, TDD) system. Subband full duplex means that in the TDD system, a network device can perform both receiving and sending in a slot or an orthogonal frequency division multiplexing (orthogonal frequency division multiplexing, OFDM) symbol by using different subbands for uplink transmission and downlink transmission.

In a possible SBFD slot configuration method, a network device supporting SBFD broadcasts cell-level uplink-downlink slot configuration signaling (tdd-UL-DL-ConfigurationCommon) in a system information block 1 (system information block 1, SIB1), to indicate a terminal device to configure all symbols in a slot configuration periodicity as flexible symbols. The flexible symbols may be used for both uplink transmission and downlink transmission, and a specific transmission direction is determined by a transmission direction of a signal or a channel scheduled by the network device. The network device schedules uplink transmission on an uplink subband of a flexible symbol, or schedules downlink transmission on a downlink subband of a flexible symbol, to implement the SBFD technology. However, when currently commercial terminal devices not supporting an SBFD function perform uplink-downlink slot configuration, the flexible symbols are used only for guard period (guard period, GP) configuration in the TDD system, and other functions of the flexible symbols fail to pass a complete test. For example, the currently commercial terminal devices not supporting the SBFD function are not fully equipped for the function that whether the flexible symbols are used for uplink transmission or downlink transmission is determined by the transmission direction of the signal or the channel scheduled by the network device. If the commercial terminal devices not supporting the SBFD function still perform slot configuration by using the foregoing method when accessing the network device supporting SBFD, the currently commercial terminal devices cannot correctly complete the uplink-downlink slot configuration. In other words, when performing the uplink-downlink slot configuration, the existing network device supporting SBFD cannot be forward compatible to implement uplink-downlink slot configuration for the terminal devices not supporting the SBFD function.

## SUMMARY

Embodiments of this application provide a resource configuration method and a communication apparatus, to resolve a problem that a network device supporting SBFD cannot be forward compatible with uplink-downlink slot configuration for a terminal device not supporting an SBFD function.

According to a first aspect, a communication method is provided. The method may be performed by a terminal device, or may be performed by a component (for example, a chip or a circuit) of the terminal device. This is not limited herein. For ease of description, the following uses an example in which the method is performed by the terminal device for description.

The method may include: A terminal device receives first signaling and second signaling from a network device, where the first signaling includes cell-level uplink-downlink slot configuration information of a first cell, the first cell is a serving cell of the terminal device, the second signaling indicates a terminal device supporting a subband full duplex SBFD function to configure types of all symbols in a first slot configuration periodicity by using the first signaling or the second signaling indicates a terminal device supporting the SBFD function to configure the types of all the symbols in the first slot configuration periodicity by using a first configuration policy, the first configuration policy is an uplink-downlink slot configuration policy dedicated to a terminal device supporting the SBFD function, and the cell-level uplink-downlink slot configuration information of the first cell includes the first slot configuration periodicity; and the terminal device configures the types of all the symbols based on the first signaling when the terminal device is a terminal device not supporting the SBFD function; or the terminal device configures the types of all the symbols based on the second signaling when the terminal device is a terminal device supporting the SBFD function.

In the foregoing technical solution, a unified uplink-downlink slot configuration design is implemented for a terminal device supporting the SBFD function and a terminal device not supporting the SBFD function. A network device supporting SBFD can further implement SBFD dedicated uplink-downlink slot configuration for a terminal device supporting SBFD without affecting uplink-downlink slot configuration for a currently commercial terminal device not supporting the SBFD function. This resolves a problem that an existing network device supporting SBFD is incompatible with uplink-downlink slot configurations for a terminal device supporting the SBFD function and for a terminal device not supporting the SBFD function.

In some implementations of the first aspect, the second signaling includes the first configuration policy, where the first configuration policy indicates to configure all the symbols in the first slot configuration periodicity as flexible symbols, or the first configuration policy is that types of all symbols in some time units in the first slot configuration periodicity are configured based on the first signaling, and that all remaining symbols in the first slot configuration periodicity are configured as flexible symbols.

In some implementations of the first aspect, the second signaling includes the first configuration policy, where the first configuration policy indicates to configure all the symbols in the first slot configuration periodicity as flexible symbols; or the first configuration policy indicates to configure types of all symbols in a last time unit in the first slot configuration periodicity based on the first signaling, and configure all remaining symbols in the first slot configuration periodicity as flexible symbols; or the first configuration policy indicates to configure types of all symbols in a 1st time unit and a last time unit in the first slot configuration periodicity based on the first signaling, and configure all remaining symbols in the first slot configuration periodicity as flexible symbols.

In some implementations of the first aspect, the second signaling includes the first configuration policy, where the first configuration policy indicates to configure all the symbols in the first slot configuration periodicity as flexible symbols; or the first configuration policy indicates to configure all symbols in a last time unit in the first slot configuration periodicity as uplink symbols, and configure all remaining symbols in the first slot configuration periodicity as flexible symbols; or the first configuration policy indicates to configure all symbols in a 1st time unit in the first slot configuration periodicity as downlink symbols, configure all symbols in a last time unit as uplink symbols, and configure all remaining symbols in the first slot configuration periodicity as flexible symbols.

In some implementations of the first aspect, the first signaling and the second signaling are carried in a SIB 1 message.

According to a second aspect, a communication method is provided. The method may be performed by a network device, or may be performed by a component (for example, a chip or a circuit) of the network device. This is not limited herein. For ease of description, the following uses an example in which the method is performed by the network device for description.

The method may include: A network device determines first signaling and second signaling, where the first signaling includes cell-level uplink-downlink slot configuration information of a first cell, the first cell is a serving cell of a terminal device, the second signaling indicates a terminal device supporting a subband full duplex SBFD function to configure types of all symbols in a first slot configuration periodicity by using the first signaling or the second signaling indicates a terminal device supporting the SBFD function to configure the types of all the symbols in the first slot configuration periodicity by using a first configuration policy, the first configuration policy is an uplink-downlink slot configuration policy dedicated to a terminal device supporting the SBFD function, and the cell-level uplink-downlink slot configuration information of the first cell includes the first slot configuration periodicity; and the network device sends the first signaling and the second signaling to the terminal device.

For beneficial effects of the second aspect, refer to the descriptions in the first aspect. Details are not described herein again.

In some implementations of the second aspect, the second signaling includes the first configuration policy, where the first configuration policy indicates to configure all the symbols in the first slot configuration periodicity as flexible symbols, or the first configuration policy is that types of all symbols in some time units in the first slot configuration periodicity are configured based on the first signaling, and that all remaining symbols in the first slot configuration periodicity are configured as flexible symbols.

In some implementations of the second aspect, the second signaling includes the first configuration policy, where the first configuration policy indicates to configure all the symbols in the first slot configuration periodicity as flexible symbols; or the first configuration policy indicates to configure types of all symbols in a last time unit in the first slot configuration periodicity based on the first signaling, and configure all remaining symbols in the first slot configuration periodicity as flexible symbols; or the first configuration policy indicates to configure types of all symbols in a 1st time unit and a last time unit in the first slot configuration periodicity based on the first signaling, and configure all remaining symbols in the first slot configuration periodicity as flexible symbols.

In some implementations of the second aspect, the second signaling includes the first configuration policy, where the first configuration policy indicates to configure all the symbols in the first slot configuration periodicity as flexible symbols; or the first configuration policy indicates to configure all symbols in a last time unit in the first slot configuration periodicity as uplink symbols, and configure all remaining symbols in the first slot configuration periodicity as flexible symbols; or the first configuration policy indicates to configure all symbols in a 1st time unit in the first slot configuration periodicity as downlink symbols, configure all symbols in a last time unit as uplink symbols, and configure all remaining symbols in the first slot configuration periodicity as flexible symbols.

In some implementations of the second aspect, the first signaling and the second signaling are carried in a SIB1 message.

According to a third aspect, a communication method is provided. The method may be performed by a terminal device, or may be performed by a component (for example, a chip or a circuit) of the terminal device. This is not limited herein. For ease of description, the following uses an example in which the method is performed by the terminal device for description.

The method may include: A terminal device receives first signaling from a network device, where the first signaling includes cell-level uplink-downlink slot configuration information of a first cell, the first cell is a serving cell of the terminal device, and the terminal device is a terminal device supporting a subband full duplex SBFD function; the terminal device configures types of all symbols in a first slot configuration periodicity based on the first signaling, where the cell-level uplink-downlink slot configuration information of the first cell includes the first slot configuration periodicity; the terminal device sends second signaling to the network device, where the second signaling indicates that the terminal device supports the SBFD function; and the terminal device receives third signaling from the network device, where the third signaling includes first terminal device-level uplink-downlink slot configuration information, and the first terminal device-level uplink-downlink slot configuration information is terminal device-level configuration information dedicated to a terminal device supporting the SBFD function; the terminal device configures all the symbols in the first slot configuration periodicity as flexible symbols; and the terminal device configures the types of all the symbols based on the third signaling; or the terminal device receives third signaling from the network device, where the third signaling includes second terminal device-level uplink-downlink slot configuration information, and the second terminal device-level uplink-downlink slot configuration information is terminal device-level configuration information used by a terminal device supporting the SBFD function and a terminal device not supporting the SBFD function; and the terminal device configures types of flexible symbols in all the symbols based on the third signaling.

In the foregoing technical solution, a unified design is implemented for a terminal device supporting the SBFD function and a terminal device not supporting the SBFD function. A network device supporting SBFD can implement SBFD dedicated uplink-downlink slot configuration for a terminal device supporting SBFD without affecting uplink-downlink slot configuration for a currently commercial terminal device not supporting the SBFD function. This resolves a problem that uplink-downlink slot configuration for a terminal device supporting the SBFD function and for a terminal device not supporting the SBFD function cannot be forward compatible.

According to a fourth aspect, a communication method is provided. The method may be performed by a network device, or may be performed by a component (for example, a chip or a circuit) of the network device. This is not limited herein. For ease of description, the following uses an example in which the method is performed by the network device for description.

The method may include: A network device sends first signaling to a terminal device, where the first signaling includes cell-level uplink-downlink slot configuration information of a first cell, and the first cell is a serving cell of the terminal device; the network device receives second signaling from the terminal device, where the second signaling indicates that the terminal device supports an SBFD function; and the network device sends third signaling to the terminal device, where the third signaling includes first terminal device-level uplink-downlink slot configuration information, and the first terminal device-level uplink-downlink slot configuration information is configuration information dedicated to a terminal device supporting the SBFD function; or the third signaling includes second terminal device-level uplink-downlink slot configuration information, and the second terminal device-level uplink-downlink slot configuration information is configuration information used by a terminal device supporting the SBFD function and a terminal device not supporting the SBFD function.

For beneficial effects of the fourth aspect, refer to the description in the third aspect. Details are not described herein again.

According to a fifth aspect, a communication method is provided. The method may be performed by a terminal device, or may be performed by a component (for example, a chip or a circuit) of the terminal device. This is not limited. For ease of description, the following uses an example in which the method is performed by the terminal device for description.

The method may include: A terminal device receives first signaling from a network device, where the first signaling includes cell-level uplink-downlink slot configuration information of a first cell, the first cell is a serving cell of the terminal device, and the terminal device is a terminal device supporting a subband full duplex SBFD function; the terminal device configures types of all symbols in a first slot configuration periodicity based on the first signaling, where the cell-level uplink-downlink slot configuration information of the first cell includes the first slot configuration periodicity; the terminal device sends second signaling to the network device, where the second signaling indicates that the terminal device supports the SBFD function; the terminal device receives third signaling and fourth signaling from the network device, where the third signaling includes second terminal device-level uplink-downlink slot configuration information, the second terminal device-level uplink-downlink slot configuration information is terminal device-level configuration information used by a terminal device supporting the SBFD function and a terminal device not supporting the SBFD function, the fourth signaling indicates a terminal device supporting the SBFD function to configure types of flexible symbols in all the symbols based on the third signaling or the fourth signaling indicates a terminal device supporting the SBFD function to configure the types of all the symbols by using a first configuration policy, and the first configuration policy is an uplink-downlink slot configuration policy dedicated to a terminal device supporting the SBFD function; and the terminal device configures types of all or some symbols in all the symbols based on the fourth signaling.

In the foregoing technical solution, a unified design is implemented for a terminal device supporting the SBFD function and a terminal device not supporting the SBFD function. A network device supporting SBFD can implement SBFD dedicated uplink-downlink slot configuration for a terminal device supporting SBFD without affecting uplink-downlink slot configuration for a currently commercial terminal device not supporting the SBFD function. This resolves an existing problem of incompatibility with uplink-downlink slot configuration for a terminal device supporting the SBFD function and for a terminal device not supporting the SBFD function.

According to a sixth aspect, a communication method is provided. The method may be performed by a network device, or may be performed by a component (for example, a chip or a circuit) of the network device. This is not limited herein. For ease of description, the following uses an example in which the method is performed by the network device for description.

The method may include: A network device sends first signaling to a terminal device, where the first signaling includes cell-level uplink-downlink slot configuration information of a first cell, and the first cell is a serving cell of the terminal device; the network device receives second signaling from the terminal device, where the second signaling indicates that the terminal device supports a subband full duplex SBFD function; and the network device sends third signaling and fourth signaling to the terminal device, where the third signaling includes second terminal device-level uplink-downlink slot configuration information, the second terminal device-level uplink-downlink slot configuration information is terminal device-level configuration information used by a terminal device supporting the SBFD function and a terminal device not supporting the SBFD function, the fourth signaling indicates a terminal device supporting the SBFD function to configure types of flexible symbols in all symbols in a first slot configuration periodicity based on the third signaling or the fourth signaling indicates a terminal device supporting the SBFD function to configure the types of all the symbols by using a first configuration policy, the first configuration policy is an uplink-downlink slot configuration policy dedicated to a terminal device supporting the SBFD function, the cell-level uplink-downlink slot configuration information of the first cell includes N first slot configuration periodicities, and N≥1 and N is an integer.

For beneficial effects of the sixth aspect, refer to the descriptions in the sixth aspect. Details are not described herein again.

According to a seventh aspect, a communication apparatus is provided. The apparatus is configured to perform the method provided in the first aspect, the third aspect, or the fifth aspect. Specifically, the apparatus may include units and/or modules, for example, a processing unit and/or a communication unit, configured to perform the method according to any one of the first aspect, the third aspect, the fifth aspect, or the possible implementations of the first aspect, the third aspect, or the fifth aspect.

In an implementation, the apparatus is a terminal device. When the apparatus is a terminal device, the communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device. When the apparatus is a chip, a chip system, or a circuit used in a terminal device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to an eighth aspect, a communication apparatus is provided. The apparatus is configured to perform the method provided in the second aspect, the fourth aspect, or the sixth aspect. Specifically, the apparatus may include units and/or modules, for example, a processing unit and/or a communication unit, configured to perform the method according to any one of the second aspect, the fourth aspect, the sixth aspect, or the possible implementations of the second aspect, the fourth aspect or the sixth aspect.

In an implementation, the apparatus is a network device. When the apparatus is a network device, the communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in a network device. When the apparatus is a chip, a chip system, or a circuit used in a network device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a ninth aspect, a communication apparatus is provided. The apparatus includes at least one processor, where the at least one processor is coupled to at least one memory, the at least one memory is configured to store a computer program or instructions, and the at least one processor is configured to invoke the computer program or the instructions from the at least one memory and run the computer program or the instructions, so that the communication apparatus performs the method according to any one of the first aspect, the third aspect, the fifth aspect, or the possible implementations of the first aspect, the third aspect, or the fifth aspect.

**In** an implementation, the apparatus is a terminal device.

**In** another implementation, the apparatus is a chip, a chip system, or a circuit used in a terminal device.

According to a tenth aspect, a communication apparatus is provided. The apparatus includes at least one processor, where the at least one processor is coupled to at least one memory, the at least one memory is configured to store a computer program or instructions, and the at least one processor is configured to invoke the computer program or the instructions from the at least one memory and run the computer program or the instructions, so that the communication apparatus performs the method according to any one of the second aspect, the fourth aspect, the sixth aspect, or the possible implementations of the second aspect, the fourth aspect or the sixth aspect.

**In** an implementation, the apparatus is a network device.

**In** another implementation, the apparatus is a chip, a chip system, or a circuit used in a network device.

According to an eleventh aspect, a processor is provided, configured to perform the methods provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a twelfth aspect, a computer-readable storage medium is provided. The computer-readable storage medium stores program code executed by a device. The program code is used to perform the method according to any one of the first aspect, the second aspect, the third aspect, the fourth aspect, the fifth aspect, the sixth aspect, and the possible implementations of the first aspect, the second aspect, the third aspect, the fourth aspect, the fifth aspect, or the sixth aspect.

According to a thirteenth aspect, a computer program product including instructions is provided. When the computer program product runs on a computer, the computer is enabled to perform the method according to any one of the first aspect, the second aspect, the third aspect, the fourth aspect, the fifth aspect, the sixth aspect, and the possible implementations of the first aspect, the second aspect, the third aspect, the fourth aspect, the fifth aspect, or the sixth aspect.

According to a fourteenth aspect, a chip is provided. The chip includes a processor and a communication interface. The processor reads, through the communication interface, instructions stored in a memory, to perform the method according to any one of the first aspect, the second aspect, the third aspect, the fourth aspect, the fifth aspect, the sixth aspect, and the possible implementations of the first aspect, the second aspect, the third aspect, the fourth aspect, the fifth aspect, or the sixth aspect.

Optionally, in an implementation, the chip further includes a memory. The memory stores a computer program or instructions. The processor is configured to execute the computer program or the instructions stored in the memory. When the computer program or the instructions are executed, the processor is configured to perform the method according to any one of the first aspect, the second aspect, the third aspect, the fourth aspect, the fifth aspect, the sixth aspect, and the possible implementations of the first aspect, the second aspect, the third aspect, the fourth aspect, the fifth aspect, or the sixth aspect.

According to a fifteenth aspect, a communication system is provided. The communication system includes the communication apparatuses shown in the ninth aspect and the tenth aspect.

**BRIEF DESCRIPTION OF DRAWINGS**

FIG. 1 is a diagram of a communication system according to an embodiment of this application;
FIG. 2 is a time-frequency diagram of subband full duplex;
FIG. 3 is a block diagram of SBFD dedicated uplink-downlink slot configuration;
FIG. 4 is a schematic flowchart of a resource configuration method according to this application;
FIG. 5 is a schematic flowchart of another resource configuration method according to this application;
FIG. 6 is a schematic flowchart of still another resource configuration method according to this application;
FIG. 7 is a block diagram of a communication apparatus 200 according to this application; and
FIG. 8 is a diagram of a structure of a communication apparatus 300 according to this application.

**DESCRIPTION OF EMBODIMENTS**

The following describes technical solutions in embodiments of this application with reference to the accompanying drawings.

The technical solutions in embodiments of this application may be applied to various communication systems, for example, wireless communication related to 5th generation (5th generation, 5G), new radio (new radio, NR), long term evolution (long term evolution, LTE), internet of things (internet of things, IoT), wireless-fidelity (wireless-fidelity, Wi-Fi), the 3rd generation partnership project (3rd generation partnership project, 3GPP), or other wireless communication that may occur in the future.

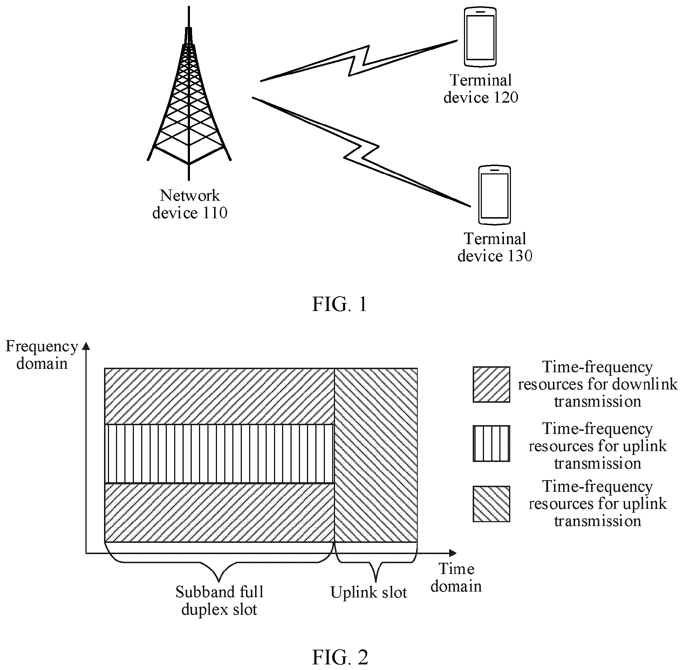

FIG. 1 is a diagram of a communication system according to an embodiment of this application. The communication system 100 includes at least one network device, for example, a network device 110 shown in FIG. 1. The communication system 100 may further include at least one terminal device, for example, a terminal device 120 and/or a terminal device 130 shown in FIG. 1. The network device 110 may communicate with the terminal device 120/130 via a radio link, to exchange information. It may be understood that, the network device and the terminal device may also be referred to as communication devices.

The network device is a network side device having a wireless transceiver function. The network device may be an apparatus that is in a radio access network (radio access network, RAN) and that provides a wireless communication function for the terminal device, and is referred to as a RAN device. For example, the network device may be a base station (base station), an evolved NodeB (evolved NodeB, eNodeB), a next generation NodeB (next generation NodeB, gNB) in a 5G mobile communication system, a subsequent evolved 3GPP base station, a transmission reception point (transmission reception point, TRP), an access node in a Wi-Fi system, a wireless relay node, or a wireless backhaul node. In communication systems using different radio access technologies (radio access technologies, RATs), names of devices having base station functions may be different. For example, a base station may be referred to as an eNB or an eNodeB in an LTE system, and may be referred to as a gNB in a 5G system or an NR system. A specific name of the base station is not limited in this application. The network device may include one or more co-site or non-co-site transmission reception points. For another example, the network device may include one or more central units (central units, CUs), one or more distributed units (distributed units, DUs), or one or more CUs and one or more DUs. For example, functions of the CU may be implemented by one entity or different entities. For example, the functions of the CU are further divided. In other words, a control plane and a user plane are separated and implemented by different entities, which are respectively a control plane CU entity (namely, a CU-CP entity) and a user plane CU entity (namely, a CU-UP entity). The CU-CP entity and the CU-UP entity may be coupled to the DU, to jointly complete a function of an access network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. In this way, some functions of a radio access network device may be implemented by a plurality of network function entities. These network function entities may be network elements in a hardware device, or may be software functions run on dedicated hardware, or may be virtualized functions instantiated on a platform (for example, a cloud platform). The network device may further include an active antenna unit (active antenna unit, AAU for short). The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application. For another example, in a vehicle-to-everything (vehicle-to-everything, V2X) technology, the access network device may be a road side unit (road side unit, RSU). A plurality of access network devices in the communication system may be base stations of a same type, or may be base stations of different types. The base station may communicate with the terminal device, or may communicate with the terminal device via a relay station. In embodiments of this application, the apparatus configured to implement a function of the network device may be the network device, or may be an apparatus that can support the network device in implementing the function, for example, a chip system or a combined component or component that can implement a function of the access network device. The apparatus may be installed in the network device. In embodiments of this application, the chip system may include a chip, or may include a chip and another discrete component.

The terminal device is a user side device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, cellular communication, device-to-device (device-to-device, D2D) communication, V2X communication, machine-to-machine/machine-type communications (machine-to-machine/machine-type communications, M2M/MTC), internet of things, virtual reality (virtual reality, VR), augmented reality (augmented reality, AR), industrial control (industrial control), self-driving (self-driving), remote medical (remote medical), a smart grid (smart grid), smart furniture, smart office, smart wearable, smart transportation, a smart city (smart city), an uncrewed aerial vehicle, and a robot. For example, the terminal device may be a handheld terminal in the cellular communication, a communication device in the D2D, an internet of things device in the MTC, a surveillance camera in the smart transportation and the smart city, or a communication device in the uncrewed aerial vehicle. The terminal device may be sometimes referred to as a user equipment (user equipment, UE), a user terminal, a user apparatus, a subscriber unit, a subscriber station, a terminal, an access terminal, an access station, a UE station, a remote station, a mobile device, a wireless communication device, or the like. In embodiments of this application, the apparatus configured to implement a function of the terminal device may be the terminal device, or may be an apparatus that can support the terminal device in implementing the function, for example, a chip system or a combined component or component that can implement a function of the terminal device. The apparatus may be installed in the terminal device.

To facilitate understanding of embodiments of this application, concepts and related procedures in this application are described first.

1. Symbol (symbol): is an abbreviation of a time domain symbol, and may also be referred to as an OFDM symbol. It should be noted that the time domain symbol may alternatively be named in combination with another multiple access manner. This is not limited in embodiments of this application. Time domain symbol lengths may vary with different subcarrier spacings.

It should be understood that symbols in a slot (slot) may include three types: a downlink symbol, an uplink symbol, and a flexible symbol. The uplink symbol can be used only for uplink transmission, and the downlink symbol can be used only for downlink transmission. The flexible symbol has no determined transmission direction, and may be used for uplink transmission or downlink transmission based on an indication of control signaling. Symbols in a slot may be all downlink symbols, or all uplink symbols, or all flexible symbols, or may be a combination of several types of symbols.

2. Time unit: may be a slot, a symbol, a subframe, a half-frame, a frame, a mini-subframe, or a mini-slot. This is not limited in this application.

3. Subband: is a part of a frequency band in a carrier, namely, one or more consecutive physical resource blocks (physical resource blocks, PRBs) in frequency domain. In this application, the subband may also be understood as a frequency domain resource.

4. SBFD: In the SBFD solution, one carrier is divided into a plurality of non-overlapping subbands, and they may have different transmission directions. In other words, one carrier includes a first subband and a second subband that do not overlap, and transmission directions of the first subband and the second subband are different. It should be noted that the first subband and the second subband are two types of subbands with different transmission directions, and this does not mean that one carrier includes only two subbands. For example, a carrier includes a subband #1 and a subband #2, and they have different transmission directions. Alternatively, a carrier includes a subband #1, a subband #2, and a subband #3. The subband #1 and the subband #3 have the same transmission direction, and the subband #1 and the subband #2 have different transmission directions.

5. SBFD slot: Frequency resources in the SBFD slot include two or more subbands with different transmission directions. For example, time-frequency division of a typical SBFD solution is shown in FIG. 2. A horizontal axis represents time domain, and a vertical axis represents frequency domain. In FIG. 2, two rectangular blocks filled with left slashes each represent a group of time-frequency resources used for downlink transmission, a rectangular block filled with vertical bars represent a group of time-frequency resources used for uplink transmission, and slots in a time domain range occupied by the three blocks of time-frequency resources are referred to as SBFD slots.

6. Non-SBFD slot: All frequency resources in the non-SBFD slot have the same transmission direction. For example, a rectangular block filled with right slashes in FIG. 2 represents a group of time-frequency resources used for uplink transmission, and slots in a time domain range occupied by the block of time-frequency resources are referred to as uplink slots. Transmission directions of all frequency resources in these slots are uplink, and these slots may be referred to as non-SBFD slots.

7. TDD flexible configuration and configuration parameter: Uplink-downlink slot configuration in NR depends on tdd-UL-DL-ConfigurationCommon and tdd-UL-DL-ConfigurationDedicated, where tdd-UL-DL-ConfigurationCommon is cell-level uplink-downlink slot configuration signaling, and tdd-UL-DL-ConfigurationDedicated is UE-level uplink-downlink slot configuration signaling.

A terminal device in each cell completes slot configuration according to the following steps.

If tdd-UL-DL-ConfigurationCommon (cell-level uplink-downlink slot configuration signaling) is indicated to the UE, the UE sets a slot format for each slot in a slot set indicated by tdd-UL-DL-ConfigurationCommon. tdd-UL-DL-ConfigurationCommon includes the following information:

(1) a reference subcarrier spacing (subcarrier spacing, SCS) $\mu_{ref}$, indicated by signaling reference-SubcarrierSpacing; and

(2) an uplink-downlink configuration pattern, indicated by signaling pattern1, where pattern1 includes:

> (a) a slot configuration periodicity P msec, indicated by signaling dl-UL-TransmissionPeriodicity, where Msec represents millisecond, and may also be written as ms in this application;
> (b) a downlink slot quantity $d_{slot}$, where symbols in each downlink slot are downlink symbols, and are indicated by signaling nrofDownlinkSlots;
> (c) a downlink symbol quantity $d_{sym}$, indicated by signaling nrofDownlinkSymbols;
> (d) an uplink slot quantity $\mu_{slot}$, indicated by signaling nrofUplinkSlots; and
> (e) an uplink symbol quantity $\mu_{sym}$, indicated by signaling nrofUplinkSymbols.

The defined slot configuration periodicity P msec includes $S = p * 2^{\mu_{ref}}$ slots. For a definition of P, refer to section 11.1 in TS 38.213. In the S slots, the first $d_{slot}$ slots include only downlink symbols, and the last $\mu_{slot}$, slots include only uplink symbols. $d_{sym}$ symbols immediately following the first $d_{slot}$ slots are downlink symbols, and $\mu_{sym}$ symbols immediately preceding the last $\mu_{slot}$ slots are uplink symbols. The remaining

$$(S - d_{slot} - \mu_{slot}) * N_{symb}^{slot} - d_{sym} - \mu_{sym}$$ symbols

are flexible symbols, where $N_{symb}^{slot}$ is a quantity of symbols in a slot.

If tdd-UL-DL-ConfigurationCommon provides both pattern1 and pattern2, the UE sets a slot format for each slot in a slot set indicated by pattern1, and sets a slot format for each slot in a slot set indicated by pattern2. pattern2 includes:

> (a) a slot configuration periodicity $P_2$ msec, indicated by signaling dl-UL-TransmissionPeriodicity;
> (b) a downlink slot quantity $d_{slot,2}$, where symbols in each downlink slot are downlink symbols, and are indicated by signaling nrofDownlinkSlots;
> (c) a downlink symbol quantity $d_{sym,2}$, indicated by signaling nrofDownlinkSymbols;
> (d) an uplink slot quantity $\mu_{slot,2}$, indicated by signaling nrofUplinkSlots; and
> (e) an uplink symbol quantity $\mu_{sym,2}$, indicated by signaling nrofUplinkSymbols.

A slot configuration periodicity $(P+P_2)$ msec includes $S = p * 2^{\mu_{ref}}$ slots and $S_2 = p_2 * 2^{\mu_{ref}}$ slots. In the $S_2$ slots, the first $d_{slot,2}$ slots include only downlink symbols, and the last $d_{slot,2}$ slots include only uplink symbols. $d_{sym,2}$ symbols immediately following the first

$d_{slot,2}$ slots are downlink symbols, and $\mu_{sym,2}$ symbols immediately preceding the last $\mu_{slot,2}$ slots are uplink symbols. The remaining

$$(S_2 - d_{slot,2} - \mu_{slot,2}) * N_{symb}^{slot} - d_{sym,2} - \mu_{sym,2}$$ symbols are flexible symbols.

If tdd-UL-DL-ConfigurationDedicated (UE-level uplink-downlink slot configuration signaling) is further indicated to the UE, the signaling tdd-UL-DL-ConfigurationDedicated is used to perform further uplink-downlink configuration only on a flexible symbol configured by using tdd-UL-DL-ConfigurationCommon in a slot configuration periodicity indicated by tdd-UL-DL-ConfigurationCommon. tdd-UL-DL-ConfigurationDedicated includes the following information:

> (1) a symbol configuration set, indicated by slotSpecificConfigurationsToAddModList, where slotSpecificConfigurationsToAddModList provides a series of flexible symbol configuration manners; and
> (2) for each symbol configuration in the symbol configuration set:
>
>> (a) A slot index is indicated by slotIndex. The slotIndex identifies a slot in a slot configuration periodicity specified in tdd-UL-DL-ConfigurationCommon.
>> (b) Directions of symbols in a slot are indicated by symbols.

Specifically, if symbols=allDownlink, all symbols in the slot are downlink symbols. If symbols=allUplink, all symbols in the slot are uplink symbols. If symbols=explicit, nrofDownlinkSymbols indicates a quantity of downlink symbols in the slot and these downlink symbols are located at the front of the slot, and nrofUplinkSymbols indicates a quantity of uplink symbols in the slot and these uplink symbols are located at the back of the slot. If nrofDownlinkSymbols is not configured, the slot has no downlink symbols. If nrofUplinkSymbols is not configured, the slot has no uplink symbols. Remaining symbols in the slot are flexible symbols.

It should be understood that, for a symbol indicated as a downlink symbol by tdd-LTL-DL-ConfigurationCommon or tdd-UL-DL-ConfigurationDedicated in a slot, the UE may perform signal receiving on the symbol; and for a symbol indicated as an uplink symbol by tdd-UL-DL-ConfigurationCommon or tdd-UL-DL-ConfigurationDedicated in a slot, the UE may perform signal sending on the symbol.

It should be further understood that only when both tdd-UL-DL-ConfigurationCommon and tdd-UL-DL-ConfigurationDedicated indicate that a corresponding symbol is a flexible symbol, the symbol is a flexible symbol. Scheduling of a flexible symbol is flexible, and scheduling of downlink control information (downlink control information, DCI) determines whether the symbol is used for downlink reception or uplink sending. For example, if the UE receives a corresponding indication of a DCI format, the UE receives a physical downlink shared channel (physical downlink shared channel, PDSCH) or a channel state information reference signal (channel state information reference signal, CSI-RS) in a flexible symbol set of the slot. For another example, if the UE receives a corresponding indication of a DCI format, a random access response (random access response, RAR) uplink (uplink, UL) grant, a fallbackRAR UL grant, or a successRAR, the UE transmits a physical uplink shared channel (physical uplink shared channel, PUSCH), a physical uplink control channel (physical uplink control channel, PUCCH), a physical random access channel (physical random access channel, PRACH), or a sounding reference signal (sounding reference signal, SRS) in the flexible symbol set of the slot.

8. SBFD dedicated uplink-downlink slot configuration

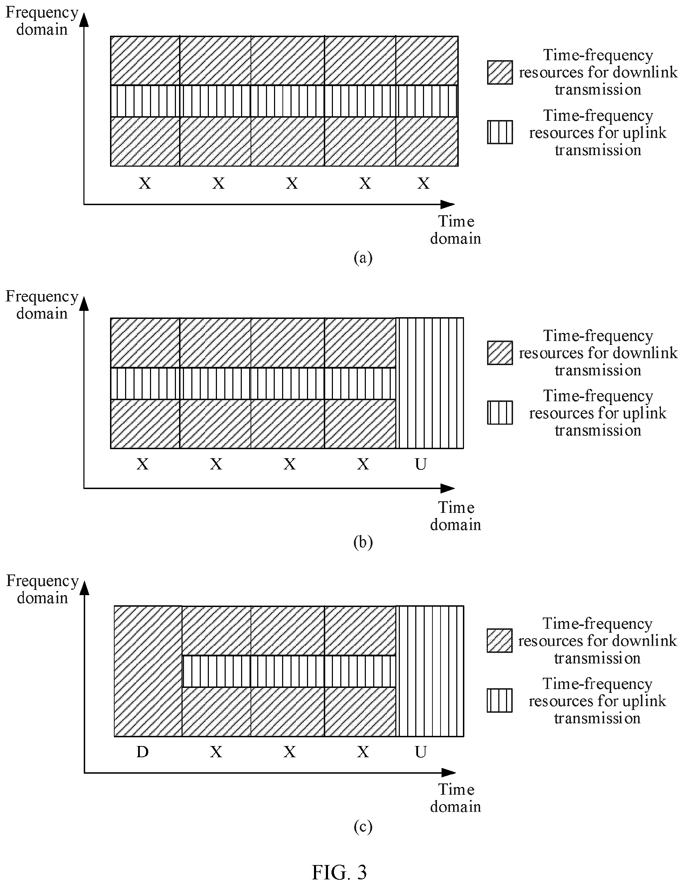

Based on different configurations of an uplink subband and a downlink subband in a slot, for example, SBFD dedicated uplink-downlink slot configuration may include the following three types: XXXXX, XXXXU, and DXXXU, where D represents a downlink time unit, all symbols in the downlink time unit are downlink symbols, no uplink subband can be configured on the downlink symbols, U represents an uplink time unit, all symbols in the uplink time unit are uplink symbols, no downlink subband can be configured on the uplink symbols, X represents an SBFD time unit, and each symbol in the SBFD time unit may be configured with at least one uplink subband and at least one downlink subband. For example, (a) in FIG. 3 is a possible example of XXXXX, (b) in FIG. 3 is a possible example of XXXXU, and (c) in FIG. 3 is a possible example of DXXXU. In this configuration method, uplink and downlink subbands configured on flexible symbols are invisible to the UE. In other words, the UE does not know frequency resource locations of the uplink and downlink subbands. In this case, if the UE determines to perform downlink transmission on a flexible symbol, a gNB should ensure that the UE is indicated to perform downlink reception only on a downlink subband configured for the flexible symbol. If the UE determines to perform uplink transmission on the flexible symbol, the gNB should ensure that the UE is indicated to perform uplink transmission only on an uplink subband configured for the flexible symbol.

It should be understood that quantities of X in XXXXX, XXXXU, and DXXXU are merely examples for description, and the quantities of X may be configured by a network device based on an actual situation. In addition, XXXXX, XXXXU, and DXXXU may be configured by using the cell-level uplink-downlink slot configuration signaling and the UE-level uplink-downlink slot configuration signaling in the concept explanation.

It should be further understood that the SBFD time unit represented by X is a flexible time unit, and each symbol in the flexible time unit is a flexible symbol.

For example, in a possible SBFD slot configuration method, a gNB supporting SBFD broadcasts cell-level uplink-downlink slot configuration signaling (tdd-UL-DL-ConfigurationCommon) in a SIB 1, to configure all symbols in a slot configuration periodicity as flexible symbols. Then, the UE further determines types of the flexible symbols based on L1 scheduling DCI configured by the gNB or UE-level uplink-downlink slot configuration signaling (tdd-UL-DL-ConfigurationDedicated). It should be understood that a symbol that is finally still a flexible symbol after cell-level uplink-downlink slot configuration and UE-level uplink-downlink slot configuration may be used to implement an SBFD function.

However, the foregoing slot configuration method has a problem of forward compatibility. Currently, functions related to flexible symbols are not fully deployed in commercial networks. In a network deployed by China Mobile, flexible symbols are used only for guard period (guard period, GP) configuration in a TDD system. In other words, the flexible symbols are used only for isolation of uplink and downlink conversion, and are not used for signal transmission and reception. For example, the cell-level uplink-downlink slot configuration (tdd-UL-DL-ConfigurationCommon) broadcast by the gNB in the SIB1 is DDDDDDSUU, where a special slot (slot S) includes flexible symbols, and the flexible symbols are used only for GP. In addition, on a terminal side, due to lack of necessary tests, not all commercial UEs (not supporting an SBFD function) can support flexible symbols to implement other functions except GP. For example, not all commercial UEs support further determining, based on the UE-level uplink-downlink slot configuration (tdd-UL-DL-ConfigurationDedicated), whether a flexible symbol configured in the cell-level uplink-downlink slot configuration (tdd-UL-DL-ConfigurationCommon) is used for uplink transmission or downlink transmission. In this case, when a currently commercial UE accesses a gNB supporting SBFD, if the SBFD dedicated uplink-downlink slot configuration method is used to perform slot configuration, the currently commercial UE cannot correctly complete uplink-downlink slot configuration.

In view of this, this application provides a resource configuration method, to effectively resolve the foregoing technical problem. It should be understood that the resource configuration method in this application may be understood as a new uplink-downlink slot configuration method. The following describes in detail the method provided in this application.

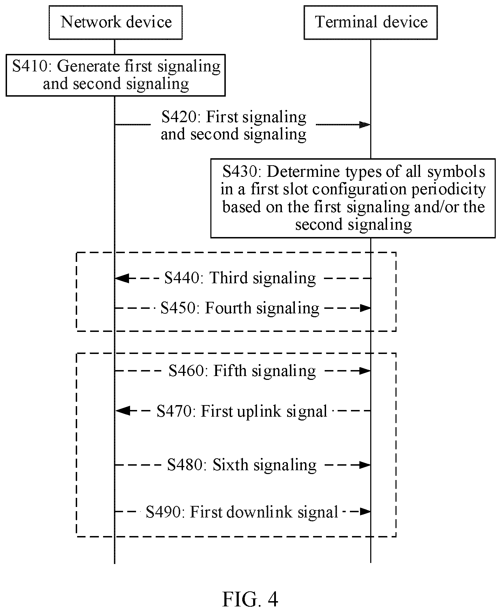

FIG. 4 is a schematic flowchart of a resource configuration method according to this application. The method includes the following steps.

S410: A network device generates first signaling and second signaling. The first signaling includes cell-level uplink-downlink slot configuration information of a first cell, the first cell is a serving cell of a terminal device, the second signaling indicates a terminal device supporting an SBFD function to configure types of all symbols in a first slot configuration periodicity by using the first signaling or the second signaling indicates a terminal device supporting the SBFD function to configure the types of all the symbols in the first slot configuration periodicity by using a first configuration policy, the first configuration policy is an uplink-downlink slot configuration policy dedicated to a terminal device supporting the SBFD function, and the cell-level uplink-downlink slot configuration information of the first cell includes the first slot configuration periodicity quantity. Correspondingly, the terminal device receives the first signaling and the second signaling.

It should be understood that the network device herein is a network device supporting the SBFD function. When the terminal device accesses a network device not supporting the SBFD function, the network device not supporting SBFD does not generate the second signaling, and both a terminal device supporting the SBFD function and a currently commercial terminal device not supporting the SBFD function perform uplink-downlink slot configuration according to a conventional technology. In other words, flexible symbols are used only for GP, and no forward compatibility problem occurs.

It should be further understood that the second signaling can be interpreted only by a terminal device supporting the SBFD function, and a terminal device not supporting the SBFD function cannot interpret the second signaling. Therefore, a currently commercial terminal device not supporting the SBFD function still performs uplink-downlink slot configuration based on the first signaling by using the conventional technology, and no forward compatibility problem occurs.

For example, the cell-level uplink-downlink slot configuration information of the first cell is cell-level uplink-downlink configuration signaling (tdd-UL-DL-ConfigurationCommon). For example, uplink-downlink slots configured by using the first signaling are DDDDDDDSUU, where flexible symbols are used only for GP in the slot S. It should be understood that the flexible symbols are used only for GP, so that better forward compatibility can be implemented, and it is ensured that a currently commercial terminal device not supporting SBFD can correctly perform uplink-downlink slot configuration.

Optionally, when the second signaling indicates a terminal device supporting the SBFD function to configure the types of all the symbols in the first slot configuration periodicity by using the first configuration policy, the second signaling includes the first configuration policy. The first configuration policy indicates to configure all the symbols in the first slot configuration periodicity as flexible symbols (namely, XXXXX in the SBFD dedicated uplink-downlink slot configuration), or the first configuration policy indicates to configure types of all symbols in some time units in the first slot configuration periodicity based on the first signaling, and configure all remaining symbols in the first slot configuration periodicity as flexible symbols.

The following uses an example to describe the case in which the first configuration policy indicates to configure types of all symbols in some time units in the first slot configuration periodicity based on the first signaling, and configure all remaining symbols in the first slot configuration periodicity as flexible symbols. For example, the first configuration policy indicates to configure types of all symbols in a last time unit in the first slot configuration periodicity based on the first signaling, and configure all remaining symbols in the first slot configuration periodicity as flexible symbols. For another example, the first configuration policy indicates to configure types of all symbols in a 1st time unit and a last time unit in the first slot configuration periodicity based on the first signaling, and configure all remaining symbols in the first slot configuration periodicity as flexible symbols.

For example, all the symbols in the first slot configuration periodicity are configured as DDDSU by using the first signaling, where D, S, and U each represent a time unit. If the first configuration policy indicates to configure all the symbols in the first slot configuration periodicity as flexible symbols, the terminal device configures all the symbols in the first slot configuration periodicity as XXXXX. If the first configuration policy indicates to configure the types of all the symbols in the last time unit in the first slot configuration periodicity based on the first signaling, and configure all the remaining symbols in the first slot configuration periodicity as flexible symbols, the terminal device configures all the symbols in the first slot configuration periodicity as XXXXU. If the first configuration policy indicates to configure the types of all the symbols in the 1st time unit and the last time unit in the first slot configuration periodicity based on the first signaling, and configure all the remaining symbols in the first slot configuration periodicity as flexible symbols, the terminal device configures all the symbols in the first slot configuration periodicity as DXXXU.

Optionally, when the second signaling indicates a terminal device supporting the SBFD function to configure the types of all the symbols in the first slot configuration periodicity by using the first configuration policy, the second signaling includes the first configuration policy, and the first configuration policy is any one of a configuration policy 1, a configuration policy 2, and a configuration policy 3. The configuration policy 1 is to configure all the symbols in the first slot configuration periodicity as flexible symbols (that is, corresponding to XXXXX in the SBFD dedicated uplink-downlink slot configuration). The configuration policy 2 is to configure the types of all the symbols in the last time unit in the first slot configuration periodicity as uplink symbols, and configure all the remaining symbols in the first slot configuration periodicity as flexible symbols (that is, corresponding to XXXXU in the SBFD dedicated uplink-downlink slot configuration). The configuration policy 3 is to configure the types of all the symbols in the 1st time unit in the first slot configuration periodicity as downlink symbols, configure the types of all the symbols in the last time unit as uplink symbols, and configure all the remaining symbols in the first slot configuration periodicity as flexible symbols (that is, corresponding to DXXXU in the SBFD dedicated uplink-downlink slot configuration).

Optionally, the first configuration policy included in the second signaling may alternatively be XXXUU, DXXXX, DXXUU, or the like. This is not limited in this application. The network device may configure a corresponding configuration policy in the second signaling based on an actual situation.

The following provides several possible specific implementations of indication by the second signaling in the method by using examples.

Implementation 1

The second signaling indicates, by using one bit, whether the first cell supports the SBFD function. For example, when the one bit is 0, it indicates that the first cell does not support the SBFD function, that is, implicitly indicates a terminal device supporting the SBFD function to configure the types of all the symbols in the first slot configuration periodicity by using the first signaling. When the one bit is 1, it indicates that the first cell supports the SBFD function, and that a terminal device supporting the SBFD function performs configuration by using the configuration policy 1 by default.

Implementation 2

The second signaling indicates, by using one bit, that the first cell supports the SBFD function. When the one bit exists, regardless of whether a value of the one bit is 0 or 1, it indicates that the first cell supports the SBFD function, and the configuration policy 1 is used for configuration by default.

Implementation 3

The second signaling indicates, by using two bits, whether the first cell supports the SBFD function. For example, when the two bits are 0, it indicates that the first cell does not support the SBFD function, that is, implicitly indicates a terminal device supporting the SBFD function to configure the types of all the symbols in the first slot configuration periodicity by using the first signaling. When the two bits are 1, 2, or 3, it indicates that the first cell supports the SBFD function. Specifically, when the two bits are 1, it indicates that the configuration policy 1 is used for configuration; when the two bits are 2, it indicates that the configuration policy 2 is used for configuration; or when the two bits are 3, it indicates that the configuration policy 3 is used for configuration.

Implementation 4

The second signaling indicates, by using two bits, that the first cell supports the SBFD function. When the two bits exist, it indicates that the first cell supports the SBFD function, and different values of the two bits indicate that different configuration policies are used. For example, when the two bits are 0, a terminal device supporting the SBFD function is indicated to configure the types of all the symbols in the first slot configuration periodicity by using the first signaling. When the two bits are 1, it indicates that the configuration policy 1 is used for configuration; when the two bits are 2, it indicates that the configuration policy 2 is used for configuration; or when the two bits are 3, it indicates that the configuration policy 3 is used for configuration.

It should be understood that the first signaling may include N first slot configuration periodicities, where $N \geq 1$ and N is an integer. For example, when N=1, the first slot configuration periodicity is a slot configuration periodicity parameter P included in pattern1 of tdd-UL-DL-ConfigurationCommon (namely, the first signaling). When N=2, the two first slot configuration periodicities are respectively a slot configuration periodicity P included in pattern1 and a slot configuration periodicity $P_2$ included in pattern2 of tdd-UL-DL-ConfigurationCommon.

Optionally, when the first signaling includes N first slot configuration periodicities, only one first configuration policy may be configured in the second signaling. In this case, when the first signaling includes a plurality of first slot configuration periodicities, types of all symbols in each first slot configuration periodicity are separately configured based on the first configuration policy. For example, N=2, the two first slot configuration periodicities are both 5 ms, the second signaling is configured in Implementation 3, and the values of the two bits in the second signaling are 2. In this case, the terminal device configures time units (where a subframe is used as an example of a time unit herein) in the two first slot configuration periodicities based on the second signaling, and configuration results are respectively XXXXU and XXXXU.

Optionally, when the first signaling includes N first slot configuration periodicities, N first configuration policies may also be configured in the second signaling, and the N first configuration policies are in one-to-one correspondence with the N first slot configuration periodicities. How the second signaling indicates the N first configuration policies is not specifically limited in this application. For example, N=2, the two first slot configuration periodicities are both 5 ms, and the second signaling includes a configuration policy 2 and a configuration policy 3. In this case, the terminal device configures time units (where a subframe is used as an example of a time unit herein) in the two first slot configuration periodicities based on the second signaling, and configuration results are respectively XXXXU and DXXXU. Optionally, when the first signaling includes N first slot configuration periodicities, the network device may further configure N pieces of second signaling. Each piece of second signaling includes one first configuration policy, and the N pieces of second signaling are in one-to-one correspondence with the N first slot configuration periodicities. For example, N=2, the two first slot configuration periodicities are both 5 ms, the network device configures two pieces of second signaling, the two pieces of second signaling are in one-to-one correspondence with the two slot configuration periodicities, the first piece of second signaling includes a configuration policy 2, and the second piece of second signaling includes a configuration policy 3. In this case, the terminal device configures time units (where a subframe is used as an example of a time unit herein) in the two first slot configuration periodicities based on the two pieces of second signaling, and configuration results are respectively XXXXU and DXXXU.

S420: The network device sends the first signaling and the second signaling to the terminal device. Correspondingly, the terminal device receives the first signaling and the second signaling from the network device.

For example, the first signaling and the second signaling are carried in a SIB1 message.

S430: The terminal device determines the types of all the symbols in the first slot configuration periodicity based on the first signaling and/or the second signaling.

When the terminal device is a terminal device not supporting the SBFD function, because the terminal device cannot understand the second signaling, the terminal device configures the types of all the symbols in the first slot configuration periodicity based on the first signaling by using the conventional technology.

When the terminal device is a terminal device supporting the SBFD function, the terminal device configures the types of all the symbols in the first slot configuration periodicity based on the second signaling. For specific configuration information that may be included in the second signaling, refer to the foregoing descriptions. Details are not described herein again.

In a possible scenario, after a terminal device supporting the SBFD function configures all the symbols in the first configuration periodicity based on the second signaling, the terminal device needs to further configure flexible symbols that have undergone the configuration. Optionally, the method may further include the following steps.

S440: The terminal device sends third signaling to the network device, where the third signaling indicates that the terminal device supports the SBFD function. Correspondingly, the network device receives the third signaling from the terminal device.

S450: The network device sends fourth signaling to the terminal device, where the fourth signaling includes second terminal device-level uplink-downlink slot configuration information, the second terminal device-level uplink-downlink slot configuration information is UE-level configuration information used by a terminal device supporting the SBFD function and a terminal device not supporting the SBFD function, and the fourth signaling indicates the terminal device to further configure types of flexible symbols based on the second terminal device-level uplink-downlink slot configuration information.

It should be understood that configuring a type of a flexible symbol means to configure the flexible symbol as an uplink symbol, a downlink symbol, or a flexible symbol.

For example, the second terminal device-level uplink-downlink slot configuration information is UE-level uplink-downlink slot configuration signaling (tdd-UL-DL-ConfigurationDedicated). For example, in a scenario in which the configuration policy 1 is used in the second signaling by default, if all the symbols in the last time unit are configured as uplink symbols by using the UE-level uplink-downlink slot configuration signaling, XXXXU may be obtained; or if all the symbols in the 1st time unit are configured as downlink symbols and all the symbols in the last time unit are configured as uplink symbols by using the UE-level uplink-downlink slot configuration signaling, DXXXU may be obtained. For example, in a scenario in which the configuration policy 2 is used in the second signaling, XXXXU is obtained, and then all symbols in a penultimate time unit may be configured as uplink symbols based on the UE-level uplink-downlink slot configuration signaling, so that XXXUU may be obtained.

For example, the fourth signaling is carried in an RRC message.

The foregoing technical solution resolves the existing problem of incompatibility with uplink-downlink slot configuration for a terminal device supporting the SBFD function and for a terminal device not supporting the SBFD function, and a unified design is implemented for a terminal device supporting the SBFD function and a terminal device not supporting the SBFD function. A network device supporting SBFD can configure symbols in uplink-downlink slot configuration for a terminal device supporting SBFD as flexible symbols without affecting uplink-downlink slot configuration for a currently commercial terminal device not supporting the SBFD function. In addition, these flexible symbols are not only used for GP, but also used for SBFD, implementing a technical solution in which uplink and downlink subbands are invisible to the UE.

The foregoing describes in detail uplink-downlink slot configuration for a UE supporting SBFD and uplink-downlink slot configuration for a UE not supporting SBFD. After completing slot configuration, the terminal device may perform uplink sending or downlink receiving. Optionally, the method further includes the following steps.

S460: The network device sends fifth signaling to the terminal device, where the fifth signaling indicates the terminal device to send a first uplink signal. Correspondingly, the terminal device receives the fifth signaling from the network device.

S470: The terminal device sends the first uplink signal to the network device based on the fifth signaling. Correspondingly, the terminal device receives the first uplink signal.

It should be understood that a terminal device supporting SBFD does not expect to send the first uplink signal on a downlink symbol or on a downlink subband of a flexible symbol.

For example, the fifth signaling is downlink DCI, and the first uplink signal is a PDSCH or a CSI-RS.

S480: The network device sends sixth signaling to the terminal device, where the sixth signaling indicates the terminal device to receive a first downlink signal. Correspondingly, the terminal device receives the sixth signaling from the network device.

S490: The network device sends the first downlink signal to the terminal device. Correspondingly, the terminal device receives the first downlink signal from the network device based on the sixth signaling.

It should be understood that a terminal device supporting SBFD does not expect to receive the first downlink signal on an uplink symbol or on an uplink subband of a flexible symbol.

For example, the sixth signaling is uplink DCI, a RAR UL grant, a fallbackRAR UL grant, or a successRAR, and the first downlink signal is a PUSCH, a PUCCH, a PRACH, or an SRS.

It should be further understood that there is no time sequence relationship between the solutions corresponding to S460 and S470 and the solutions corresponding to S480 and S490.

It should be further understood that, because the terminal device is a half-duplex terminal, the terminal device does not expect the first uplink signal and the first downlink signal to be simultaneously received or sent on a same symbol.

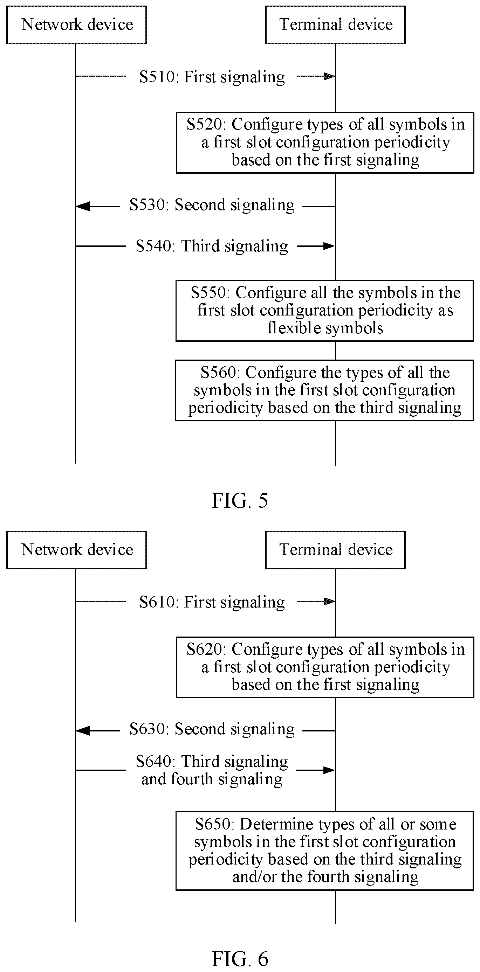

FIG. 5 is a schematic flowchart of another resource configuration method according to this application. The method includes the following steps.

S510: A network device sends first signaling. The first signaling includes cell-level uplink-downlink slot configuration information of a first cell, and the first cell is a serving cell of a terminal device. Correspondingly, the terminal device receives the first signaling from the network device.

It should be understood that the network device herein is a network device supporting an SBFD function. When the terminal device accesses a network device not supporting the SBFD function, the network device not supporting the SBFD function performs uplink-downlink slot configuration for both a terminal device supporting the SBFD function and a currently commercial terminal device not supporting the SBFD function according to the conventional technology. In other words, flexible symbols are used only for GP, and no forward compatibility problem occurs.

For example, the cell-level uplink-downlink slot configuration information of the first cell is cell-level uplink-downlink configuration signaling (tdd-LTL-DL-ConfigurationCommon). For example, uplink-downlink slots configured by using the first signaling are DDDDDDDSUU or DDDSU, where flexible symbols are used only for GP in a slot S. It should be understood that the flexible symbols are used only for GP, so that better forward compatibility can be implemented, and it is ensured that a currently commercial terminal device not supporting SBFD can correctly perform uplink-downlink slot configuration.

Optionally, the first signaling is carried in a SIB1 message.

S520: The terminal device configures types of all symbols in a first slot configuration periodicity based on the first signaling, where the cell-level uplink-downlink slot configuration information of the first cell includes the first slot configuration periodicity.

It should be understood that the terminal device configures the types of all the symbols in the first slot configuration periodicity based on the first signaling by using the conventional technology.

It should be understood that the first signaling may include N first slot configuration periodicities, where $N \geq 1$ and N is an integer. Optionally, N=1 or 2. For example, when N=1, the first slot configuration periodicity is a slot configuration periodicity parameter P included in pattern1 of tdd-UL-DL-ConfigurationCommon. When N=2, the two first slot configuration periodicities are respectively a slot configuration periodicity P included in pattern1 and a slot configuration periodicity $P_2$ included in pattern2 of tdd-UL-DL-ConfigurationCommon.

S530: The terminal device sends second signaling to the network device, where the second signaling indicates that the terminal device supports the SBFD function. Correspondingly, the network device receives the second signaling from the terminal device.

It should be understood that only a terminal device supporting SBFD reports the second signaling to the network device, and a terminal device not supporting SBFD does not report the second signaling.

S540: The network device sends third signaling to the terminal device, where the third signaling includes first terminal device-level uplink-downlink slot configuration information, and the first terminal device-level uplink-downlink slot configuration information is UE-level configuration information dedicated to a terminal device supporting the SBFD function.

It should be understood that UE-level uplink-downlink slot configuration information dedicated to a terminal device supporting SBFD is used to distinguish from UE-level TDD uplink slot configuration signaling (tdd-UL-DL-ConfigurationDedicated) in the conventional technology.

It should be further understood that after receiving the third signaling, the terminal device reconfigures all the symbols in the first slot configuration periodicity. For a reconfiguration method, refer to S550.

It should be further understood that the network device sends the third signaling only to a terminal device supporting SBFD, and sends UE-level uplink-downlink slot configuration signaling (tdd-UL-DL-Configuration-

Dedicated) in the conventional technology to a UE not supporting SBFD. The terminal device not supporting SBFD performs slot configuration based on the UE-level uplink-downlink slot configuration signaling (tdd-UL-DL-ConfigurationDedicated) in the conventional technology by using the conventional technology. This is to ensure that a terminal device not supporting SBFD can still work normally when accessing a network device supporting SBFD.

For example, the third signaling is carried in an RRC message.

For example, the UE-level uplink-downlink slot configuration information used by a terminal device supporting SBFD is the same as the cell-level uplink-downlink slot configuration signaling (tdd-UL-DL-ConfigurationCommon), and a configuration method is also the same as that of the cell-level uplink-downlink slot configuration signaling. For a specific configuration method, refer to the foregoing descriptions. Details are not described herein again.

For example, the UE-level uplink-downlink slot configuration information used by a terminal device supporting SBFD is the same as the UE-level uplink-downlink slot configuration signaling (tdd-UL-DL-ConfigurationDedicated), and a configuration method is also the same as that of the UE-level uplink-downlink slot configuration signaling. For a specific configuration method, refer to the foregoing descriptions. Details are not described herein again.

Optionally, if the terminal device supporting SBFD in S540 does not receive the third signaling, but receives the UE-level TDD uplink-downlink slot configuration signaling (tdd-UL-DL-ConfigurationDedicated) in the conventional technology, the terminal device performs slot configuration by using the conventional technology. This is to ensure that a terminal device supporting the SBFD function can still work normally when accessing a cell not supporting SBFD. In addition, a more flexible configuration manner is also provided for a terminal device supporting SBFD. To be specific, a network device supporting SBFD can also configure a terminal device supporting SBFD as a non-SBFD function.

S550: The terminal device configures all the symbols in the first slot configuration periodicity as flexible symbols.

S560: The terminal device configures the types of all the symbols in the first slot configuration periodicity based on the third signaling.

The foregoing describes in detail slot configuration for a terminal device supporting the SBFD function and slot configuration for a terminal device not supporting the SBFD function. After completing slot configuration, the terminal device may perform uplink sending or downlink receiving. For descriptions of uplink sending and downlink receiving of the terminal device, refer to the descriptions in S460 to S490. Details are not described herein again.

The foregoing technical solution resolves the existing problem of incompatibility with uplink-downlink slot configuration for a terminal device supporting the SBFD function and uplink-downlink slot configuration for a terminal device not supporting the SBFD function. A network device supporting SBFD can configure symbols in uplink-downlink slot configuration for a terminal device supporting SBFD as flexible symbols without affecting uplink-downlink slot configuration for a currently commercial terminal device not supporting the SBFD function. In addition, these flexible symbols are not only used for GP, but also used for SBFD, implementing a technical solution in which uplink and downlink subbands are invisible to the UE.

FIG. 6 is a schematic flowchart of still another resource configuration method according to this application. The method includes the following steps.

For S610 to S630, refer to descriptions in S510 to S530. Details are not described herein again.

S640: The network device sends third signaling and fourth signaling to the terminal device. Correspondingly, the terminal device receives the third signaling and the fourth signaling from the network device.

It should be understood that the network device and the terminal device herein are network devices supporting the SBFD function.

The third signaling includes second terminal device-level uplink-downlink slot configuration information, the second terminal device-level uplink-downlink slot configuration information is configuration information used by a terminal device supporting the SBFD function and a terminal device not supporting the SBFD function, the fourth signaling indicates a terminal device supporting the SBFD function to configure types of flexible symbols in all the symbols based on the third signaling or the fourth signaling indicates a terminal device supporting the SBFD function to configure the types of all the symbols by using a first configuration policy, and the first configuration policy is an uplink-downlink slot configuration policy dedicated to a terminal device supporting the SBFD function.

For example, the second terminal device-level uplink-downlink slot configuration information is UE-level uplink-downlink slot configuration signaling (tdd-UL-DL-ConfigurationDedicated).

For example, the third signaling and the fourth signaling are carried in an RRC message.

It should be understood that, when the fourth signaling indicates a terminal device supporting the SBFD function to configure the types of the flexible symbols in all the symbols based on the third signaling, the terminal device continues to further configure, based on third configuration information, symbols that are still flexible symbols after the types of all the symbols in the first configuration periodicity have been configured by using the first signaling. To be specific, after cell-level uplink-downlink slot configuration (first signaling configuration), the terminal device further performs UE-level uplink-downlink slot configuration (the third signaling configuration).

Optionally, when the fourth signaling indicates a terminal device supporting the SBFD function to configure the types of all the symbols in the first slot configuration periodicity by using the first configuration policy, the fourth signaling includes the first configuration policy. The first configuration policy indicates to configure all the symbols in the first slot configuration periodicity as flexible symbols (namely, XXXXX in SBFD dedicated uplink-downlink configuration), or the first configuration policy indicates to configure types of all symbols in some time units in the first slot configuration periodicity based on the first signaling, and configure all remaining symbols in the first slot configuration periodicity as flexible symbols.

The following uses an example to describe the case in which the first configuration policy indicates to configure types of all symbols in some time units in the first slot configuration periodicity based on the first signaling, and configure all remaining symbols in the first slot configuration periodicity as flexible symbols. For example, the first configuration policy indicates to configure types of all symbols in a last time unit in the first slot configuration periodicity based on the first signaling, and configure all remaining symbols in the first slot configuration periodicity as flexible symbols. For another example, the first configuration policy indicates to configure types of all symbols in a 1st time unit and a last time unit in the first slot configuration periodicity based on the first signaling, and configure all remaining symbols in the first slot configuration periodicity as flexible symbols.

For example, all the symbols in the first slot configuration periodicity are configured as DDDSU by using the first signaling, where D, S, and U each represent a time unit. If the first configuration policy indicates to configure all the symbols in the first slot configuration periodicity as flexible symbols, the terminal device configures all the symbols in the first slot configuration periodicity as XXXXX. If the first configuration policy indicates to configure the types of all the symbols in the last time unit in the first slot configuration periodicity based on the first signaling, and configure all the remaining symbols in the first slot configuration periodicity as flexible symbols, the terminal device configures all the symbols in the first slot configuration periodicity as XXXXU. If the first configuration policy indicates to configure the types of all the symbols in the 1st time unit and the last time unit in the first slot configuration periodicity based on the first signaling, and configure all the remaining symbols in the first slot configuration periodicity as flexible symbols, the terminal device configures all the symbols in the first slot configuration periodicity as DXXXU.

Optionally, when the fourth signaling indicates a terminal device supporting the SBFD function to configure the types of all the symbols in the first slot configuration periodicity by using the first configuration policy, the fourth signaling includes the first configuration policy, and the first configuration policy is any one of a configuration policy 1, a configuration policy 2, and a configuration policy 3. The configuration policy 1 is to configure all the symbols in the first slot configuration periodicity as flexible symbols (that is, corresponding to XXXXX in the SBFD dedicated uplink-downlink configuration). The configuration policy 2 is to configure the types of all the symbols in the last time unit in the first slot configuration periodicity as uplink symbols, and configure all the remaining symbols in the first slot configuration periodicity as flexible symbols (that is, corresponding to XXXXU in the SBFD dedicated uplink-downlink configuration). The configuration policy 3 is to configure the types of all the symbols in the 1st time unit in the first slot configuration periodicity as downlink symbols, configure the types of all the symbols in the last time unit as uplink symbols, and configure all the remaining symbols in the first slot configuration periodicity as flexible symbols (that is, corresponding to DXXXU in the SBFD dedicated uplink-downlink configuration).

The following provides several possible specific implementations of indication by the fourth signaling in the method by using examples.

Implementation 1

The fourth signaling indicates, by using one bit, whether the first cell supports the SBFD function. For example, when the one bit is 0, it indicates that the first cell does not support the SBFD function, that is, implicitly indicates a terminal device supporting the SBFD function to configure the types of the flexible symbols in all the symbols in the first slot configuration periodicity by using the third signaling. When the one bit is 1, it indicates that the first cell supports the SBFD function, and that a terminal device supporting the SBFD function performs configuration by using the configuration policy 1 by default.

Implementation 2

The fourth signaling indicates, by using one bit, that the first cell supports the SBFD function. When the one bit exists, regardless of whether a value of the one bit is 0 or 1, it indicates that the first cell supports the SBFD function, and the configuration policy 1 is used for configuration by default.

Implementation 3

The fourth signaling indicates, by using two bits, whether the first cell supports the SBFD function. For example, when the two bits are 0, it indicates that the first cell does not support the SBFD function, that is, implicitly indicates a terminal device supporting the SBFD function to configure the types of the flexible symbols in all the symbols in the first slot configuration periodicity by using the third signaling. When the two bits are 1, 2, or 3, it indicates that the first cell supports the SBFD function. Specifically, when the two bits are 1, it indicates that the configuration policy 1 is used for configuration; when the two bits are 2, it indicates that the configuration policy 2 is used for configuration; or when the two bits are 3, it indicates that the configuration policy 3 is used for configuration.

Implementation 4

The second signaling indicates, by using two bits, that the first cell supports the SBFD function. When the two bits exist, it indicates that the first cell supports the SBFD function, and different values of the two bits indicate that different configuration policies are used. For example, when the two bits are 0, a terminal device supporting the SBFD function is indicated to configure the types of all the symbols in the first slot configuration periodicity by using the third signaling. When the two bits are 1, it indicates that the configuration policy 1 is used for configuration; when the two bits are 2, it indicates that the configuration policy 2 is used for configuration; or when the two bits are 3, it indicates that the configuration policy 3 is used for configuration.

When the first signaling includes a plurality of first slot configuration periodicities, for how the fourth signaling indicates corresponding first configuration policies for the plurality of slot configuration periodicities, refer to the descriptions in which the second signaling indicates corresponding first configuration policies for the plurality of slot configuration periodicities. Details are not described herein again.

S650: The terminal device determines types of all or some symbols in the first slot configuration periodicity based on the third signaling and/or the fourth signaling.

When the fourth signaling indicates a terminal device supporting the SBFD function to configure the types of the flexible symbols in all the symbols in the first slot configuration periodicity (that is, configure types of some symbols in the first slot configuration periodicity) by using the third signaling, the terminal device continues to further configure, based on third configuration information, symbols that are still flexible symbols after the types of all the symbols in the first configuration periodicity have been configured by using the first signaling. To be specific, after cell-level uplink-downlink slot configuration (first signaling configuration), the terminal device further performs UE-level uplink-downlink slot configuration (the third signaling configuration).

When the fourth signaling indicates a terminal device supporting the SBFD function to configure the types of all the symbols by using the first configuration policy, the terminal device configures the types of all the symbols in the first configuration periodicity based on the fourth signaling.

The foregoing describes in detail slot configuration for a terminal device supporting the SBFD function and slot configuration for a terminal device not supporting the SBFD function. After completing slot configuration, the terminal device may perform uplink sending or downlink receiving. For descriptions of uplink sending and downlink receiving of the terminal device, refer to the descriptions in S460 to S490. Details are not described herein again.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, methods and operations implemented by a device (for example, the terminal device or the network device) may also be implemented by a component (for example, a chip or a circuit) of the device.

The methods provided in embodiments of this application are described above in detail with reference to FIG. 1 to FIG. 6. The foregoing methods are mainly described from a perspective of interaction between the terminal device and the network device. It may be understood that, to implement the foregoing functions, the terminal device and the network device include corresponding hardware structures and/or software modules for performing the functions.

A person skilled in the art should be able to be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

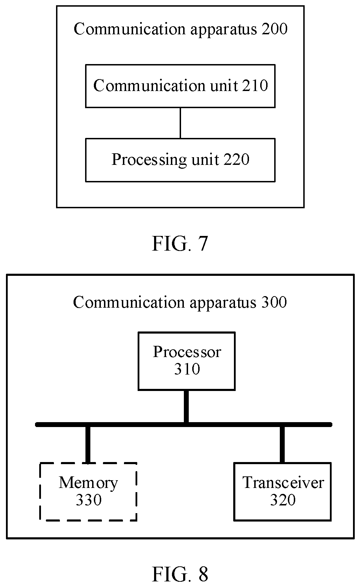

The following describes in detail, with reference to FIG. 7 and FIG. 8, communication apparatuses provided in embodiments of this application. It should be understood that descriptions of apparatus embodiments correspond to the descriptions of the method embodiments. Therefore, for content that is not described in detail, refer to the foregoing method embodiments. For brevity, a part of content is not described again. In embodiments of this application, functional modules of the terminal device or the network device may be obtained through division based on the foregoing method examples. For example, functional modules may be obtained through division in correspondence to functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. Descriptions are provided below by using an example in which each functional module is obtained through division based on each corresponding function.

The foregoing describes in detail the methods provided in this application. The following describes communication apparatuses provided in this application. In a possible implementation, the apparatus is configured to implement steps or procedures corresponding to the receiver device in the foregoing method embodiments. In another possible implementation, the apparatus is configured to implement steps or procedures corresponding to the transmitter device in the foregoing method embodiments.

FIG. 7 is a block diagram of a communication apparatus 200 according to an embodiment of this application. As shown in FIG. 7, the apparatus 200 may include a communication unit 210 and a processing unit 220. The communication unit 210 may communicate with the outside, and the processing unit 220 is configured to process data. The communication unit 210 may also be referred to as a communication interface or a transceiver unit.

In a possible design, the apparatus 200 may implement steps or procedures performed by the transmitter device in the foregoing method embodiments. The processing unit 220 is configured to perform processing-related operations of the transmitter device in the foregoing method embodiments, and the communication unit 210 is configured to perform sending-related operations of the transmitter device in the foregoing method embodiments.

In another possible design, the apparatus 200 may implement steps or procedures performed by the receiver device in the foregoing method embodiments. The communication unit 210 is configured to perform receiving-related operations of the receiver device in the foregoing method embodiments, and the processing unit 220 is configured to perform processing-related operations of the receiver device in the foregoing method embodiments.

It should be understood that the apparatus 200 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 200 may be specifically the transmitter device in the foregoing embodiments, and may be configured to perform procedures and/or steps corresponding to the transmitter device in the foregoing method embodiments. Alternatively, the apparatus 200 may be specifically the receiver device in the foregoing embodiments, and may be configured to perform procedures and/or steps corresponding to the receiver device in the foregoing method embodiments. To avoid repetition, details are not described herein again.

The apparatus 200 in each of the foregoing solutions has functions of implementing corresponding steps performed by the transmitter device in the foregoing method, or the apparatus 200 in each of the foregoing solutions has functions of implementing corresponding steps performed by the receiver device in the foregoing method. The function may be implemented by hardware, or may be implemented by hardware executing corresponding software. The hardware or the software includes one or more modules corresponding to the foregoing functions. For example, the communication unit may be replaced by a transceiver (for example, a sending unit in the communication unit may be replaced by a transmitter, and a receiving unit in the communication unit may be replaced by a receiver), and another unit such as the processing unit may be replaced by a processor, to separately perform a sending and receiving operation and a related processing operation in each method embodiment.

In addition, the communication unit may alternatively be a transceiver circuit (for example, may include a receiving circuit and a sending circuit), and the processing unit may be a processing circuit. In this embodiment of this application, the apparatus in FIG. 7 may be the AP or the STA in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

FIG. 8 is a block diagram of a communication apparatus 300 according to an embodiment of this application. The apparatus 300 includes a processor 310 and a transceiver 320. The processor 310 and the transceiver 320 communicate with each other through an internal connection path, and the processor 310 is configured to execute instructions, to control the transceiver 320 to send a signal and/or receive a signal.

Optionally, the apparatus 300 may further include a memory 330. The memory 330 communicates with the processor 310 and the transceiver 320 through internal connection paths. The memory 330 is configured to store instructions, and the processor 310 may execute the instructions stored in the memory 330. **In** a possible implementation, the apparatus 300 is configured to implement procedures and steps corresponding to the transmitter device in the foregoing method embodiments. **In** another possible implementation, the apparatus 300 is configured to implement procedures and steps corresponding to the receiver device in the foregoing method embodiments.

It should be understood that the apparatus 300 may be specifically the transmitter device or the receiver device in the foregoing embodiments, or may be a chip or a chip system. Correspondingly, the transceiver 320 may be a transceiver circuit of the chip. This is not limited herein. Specifically, the apparatus 300 may be configured to perform steps and/or procedures corresponding to the transmitter device or the receiver device in the foregoing method embodiments. Optionally, the memory 330 may include a read-only memory and a random access memory, and provide instructions and data for the processor. A part of the memory may further include a non-volatile random access memory. For example, the memory may further store information of a device type. The processor 310 may be configured to execute the instructions stored in the memory; and when the processor 310 executes the instructions stored in the memory, the processor 310 is configured to perform steps and/or procedures corresponding to the transmitter device or the receiver device in the foregoing method embodiments.

**In** an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. **In** an implementation process, steps in the foregoing method embodiments can be implemented by using a hardware integrated logic circuit in the processor, or by using instructions in a form of software. The processor may be a general-purpose processor, a digital signal processor (DSP), an application specific integrated circuit (ASIC), a field programmable gate array (FPGA) or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM). It should be noted that the memory in the systems and methods described in this specification is intended to include, but not limited to, these memories and any memory of another proper type.

It should be noted that when the processor is a general-purpose processor, a DSP, an ASIC, an FPGA or another programmable logic device, a discrete gate or a transistor logic device, or a discrete hardware assembly, a memory (storage module) may be integrated into the processor.

In addition, this application further provides a computer-readable storage medium. The computer-readable storage medium stores computer instructions. When the computer instructions are run on a computer, operations and/or procedures performed by the terminal device or the network device in the method embodiments of this application are performed.

This application further provides a computer program product. The computer program product includes computer program code or instructions. When the computer program code or the instructions are run on a computer, operations and/or procedures performed by the terminal device or the network device in the method embodiments of this application are performed.

In addition, this application further provides a chip, and the chip includes a processor. A memory configured to store a computer program is disposed independent of the chip. The processor is configured to execute the computer program stored in the memory, so that an operation and/or processing performed by the terminal device or the network device in any method embodiment is performed.

Further, the chip may include a communication interface. The communication interface may be an input/output interface, an interface circuit, or the like. Further, the chip may include the memory.

In addition, this application further provides a communication system. The communication system includes the terminal device and the network device in embodiments of this application.

It should be further noted that the memory described herein is intended to include, but not limited to, these memories and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, for example, a USB flash drive, a removable hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be further understood that ordinal numbers such as "first" and "second" in embodiments of this application are for distinguishing between a plurality of objects, but are not intended to limit a size, content, an order, a time sequence, priorities, importance of the plurality of objects, or the like. For example, first information and second information do not indicate a difference in an information amount, content, a priority, an importance degree, or the like.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that in this application, "at least one" means one or more, and "a plurality of" means two or more. "At least one item (piece)" or a similar expression thereof means one item (piece) or a plurality of items (pieces), that is, any combination of these items, including any combination of singular items (pieces) or plural items (pieces). For example, at least one of a, b, or c represents a, b, c, a and b, a and c, b and c, or a and b and c.

It should be further understood that, unless otherwise specified, a meaning similar to "an item includes one or more of the following: A, B, and C" in this application usually means that the item may be any one of the following: A; B; C; A and B; A and C; B and C; A, B and C; A and A; A, A and A; A, A and B; A, A and C; A, B and B; A, C and C; B and B, B, B and B, B, B and C, C and C; C, C and C, and other combinations of A, B, and C. The foregoing uses three elements A, B, and C as an example to describe an optional case of the item. When an expression is "an item includes at least one of the following: A, B, ..., and X", in other words, more elements are included in the expression, a case to which the item is applicable may also be obtained according to the foregoing rule.

It should be further understood that, the term "and/or" in this application describes only an association relationship between associated objects, and represents that three relationships may exist. For example, A and/or B may represent the following cases: A exists alone, both A and B exist, and B exists alone, where A and B may be singular or plural. The character "/" generally indicates an "or" relationship between the associated objects. For example, A/B indicates A or B.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A resource configuration method, comprising:

   receiving, by a terminal device, first signaling and second signaling from a network device, wherein the first signaling comprises cell-level uplink-downlink slot configuration information of a first cell, the first cell is a serving cell of the terminal device, the second signaling indicates a terminal device supporting a subband full duplex SBFD function to configure types of all symbols in a first slot configuration periodicity by using the first signaling or the second signaling indicates a terminal device supporting the SBFD function to configure the types of all the symbols in the first slot configuration periodicity by using a first configuration policy, the first configuration policy is an uplink-downlink slot configuration policy dedicated to a terminal device supporting the SBFD function, and the cell-level uplink-downlink slot configuration information of the first cell comprises the first slot configuration periodicity; and

   configuring, by the terminal device, the types of all the symbols based on the first signaling when the terminal device is a terminal device not supporting the SBFD function; or
   configuring, by the terminal device, the types of all the symbols based on the second signaling when the terminal device is a terminal device supporting the SBFD function.

2. The method according to claim 1, wherein the second signaling comprises the first configuration policy, wherein
   the first configuration policy indicates to configure all the symbols in the first slot configuration periodicity as flexible symbols, or the first configuration policy is that types of all symbols in some time units in the first slot configuration periodicity are configured based on the first signaling, and that all remaining symbols in the first slot configuration periodicity are configured as flexible symbols.

3. The method according to claim 1, wherein the second signaling comprises the first configuration policy, wherein

   the first configuration policy indicates to configure all the symbols in the first slot configuration periodicity as flexible symbols; or
   the first configuration policy indicates to configure types of all symbols in a last time unit in the first slot configuration periodicity based on the first signaling, and configure all remaining symbols in the first slot configuration periodicity as flexible symbols; or
   the first configuration policy indicates to configure types of all symbols in a 1st time unit and a last time unit in the first slot configuration periodicity based on the first signaling, and configure all remaining symbols in the first slot configuration periodicity as flexible symbols.

4. The method according to claim 1, wherein the second signaling comprises the first configuration policy, wherein

the first configuration policy indicates to configure all the symbols in the first slot configuration periodicity as flexible symbols; or
the first configuration policy indicates to configure all symbols in a last time unit in the first slot configuration periodicity as uplink symbols, and configure all remaining symbols in the first slot configuration periodicity as flexible symbols; or
the first configuration policy indicates to configure all symbols in a 1st time unit in the first slot configuration periodicity as downlink symbols, configure all symbols in a last time unit as uplink symbols, and configure all remaining symbols in the first slot configuration periodicity as flexible symbols.

5. The method according to any one of claims 1 to 4, wherein the first signaling and the second signaling are carried in a system information block SIB1 message.

6. A resource configuration method, comprising:

determining, by a network device, first signaling and second signaling, wherein the first signaling comprises cell-level uplink-downlink slot configuration information of a first cell, the first cell is a serving cell of a terminal device, the second signaling indicates a terminal device supporting a subband full duplex SBFD function to configure types of all symbols in a first slot configuration periodicity by using the first signaling or the second signaling indicates a terminal device supporting the SBFD function to configure the types of all the symbols in the first slot configuration periodicity by using a first configuration policy, the first configuration policy is an uplink-downlink slot configuration policy dedicated to a terminal device supporting the SBFD function, and the cell-level uplink-downlink slot configuration information of the first cell comprises the first slot configuration periodicity; and
sending, by the network device, the first signaling and the second signaling to the terminal device.

7. The method according to claim 6, wherein the second signaling comprises the first configuration policy, wherein
the first configuration policy indicates to configure all the symbols in the first slot configuration periodicity as flexible symbols, or the first configuration policy is that types of all symbols in some time units in the first slot configuration periodicity are configured based on the first signaling, and that all remaining symbols in the first slot configuration periodicity are configured as flexible symbols.

8. The method according to claim 6, wherein the second signaling comprises the first configuration policy, wherein

the first configuration policy indicates to configure all the symbols in the first slot configuration periodicity as flexible symbols; or
the first configuration policy indicates to configure types of all symbols in a last time unit in the first slot configuration periodicity based on the first signaling, and configure all remaining symbols in the first slot configuration periodicity as flexible symbols; or
the first configuration policy indicates to configure types of all symbols in a 1st time unit and a last time unit in the first slot configuration periodicity based on the first signaling, and configure all remaining symbols in the first slot configuration periodicity as flexible symbols.

9. The method according to claim 6, wherein the second signaling comprises the first configuration policy, wherein

the first configuration policy indicates to configure all the symbols in the first slot configuration periodicity as flexible symbols; or
the first configuration policy indicates to configure all symbols in a last time unit in the first slot configuration periodicity as uplink symbols, and configure all remaining symbols in the first slot configuration periodicity as flexible symbols; or
the first configuration policy indicates to configure all symbols in a 1st time unit in the first slot configuration periodicity as downlink symbols, configure all symbols in a last time unit as uplink symbols, and configure all remaining symbols in the first slot configuration periodicity as flexible symbols.

10. The method according to any one of claims 6 to 9, wherein the first signaling and the second signaling are carried in a system information block SIB1 message.

11. A resource configuration method, comprising:

receiving, by a terminal device, first signaling from a network device, wherein the first signaling comprises cell-level uplink-downlink slot configuration information of a first cell, the first cell is a serving cell of the terminal device, and the terminal device is a terminal device supporting a subband full duplex SBFD function;

configuring, by the terminal device, types of all symbols in a first slot configuration periodicity based on the first signaling, wherein the cell-level uplink-downlink slot configuration information of the first cell comprises the first slot configuration periodicity;

sending, by the terminal device, second signaling to the network device, wherein the second signaling indicates that the terminal device supports the SBFD function; and

receiving, by the terminal device, third signaling from the network device, wherein the third signaling comprises first terminal device-level uplink-downlink slot configuration information, and the first terminal device-level uplink-downlink slot configuration information is terminal device-level configuration information dedicated to a terminal device supporting the SBFD function;

configuring, by the terminal device, all the symbols in the first slot configuration periodicity as flexible symbols; and

configuring, by the terminal device, the types of all the symbols based on the third signaling; or

receiving, by the terminal device, third signaling from the network device, wherein the third signaling comprises second terminal device-level uplink-downlink slot configuration information, and the second terminal device-level uplink-downlink slot configuration information is terminal device-level configuration information used by a terminal device supporting the SBFD function and a terminal device not supporting the SBFD function; and

configuring, by the terminal device, types of flexible symbols in all the symbols based on the third signaling.

12. A resource configuration method, comprising:

sending, by a network device, first signaling to a terminal device, wherein the first signaling comprises cell-level uplink-downlink slot configuration information of a first cell, and the first cell is a serving cell of the terminal device;

receiving, by the network device, second signaling from the terminal device, wherein the second signaling indicates that the terminal device supports an SBFD function; and

sending, by the network device, third signaling to the terminal device, wherein the third signaling comprises first terminal device-level uplink-downlink slot configuration information, and the first terminal device-level uplink-downlink slot configuration information is configuration information dedicated to a terminal device supporting the SBFD function; or the third signaling comprises second terminal device-level uplink-downlink slot configuration information, and the second terminal device-level uplink-downlink slot configuration information is configuration information used by a terminal device supporting the SBFD function and a terminal device not supporting the SBFD function.

13. A resource configuration method, comprising:

receiving, by a terminal device, first signaling from a network device, wherein the first signaling comprises cell-level uplink-downlink slot configuration information of a first cell, the first cell is a serving cell of the terminal device, and the terminal device is a terminal device supporting a subband full duplex SBFD function;

configuring, by the terminal device, types of all symbols in a first slot configuration periodicity based on the first signaling, wherein the cell-level uplink-downlink slot configuration information of the first cell comprises the first slot configuration periodicity;

sending, by the terminal device, second signaling to the network device, wherein the second signaling indicates that the terminal device supports the SBFD function;

receiving, by the terminal device, third signaling and fourth signaling from the network device, wherein the third signaling comprises second terminal device-level uplink-downlink slot configuration information, the second terminal device-level uplink-downlink slot configuration information is terminal device-level configuration information used by a terminal device supporting the SBFD function and a terminal device not supporting the SBFD function, the fourth signaling indicates a terminal device supporting the SBFD function to configure types of flexible symbols in the first slot configuration periodicity based on the third signaling or the fourth signaling indicates a terminal device supporting the SBFD function to configure the types of all the symbols in the first slot configuration periodicity by using a first configuration policy, and the first configuration policy is an uplink-downlink slot configuration policy dedicated to a terminal device supporting the SBFD function; and

configuring, by the terminal device, types of all or some symbols in all the symbols based on the fourth signaling.

14. A resource configuration method, comprising:

sending, by a network device, first signaling to a terminal device, wherein the first signaling comprises cell-level uplink-downlink slot configuration information of a first cell, and the first cell is a serving cell of the terminal device;

receiving, by the network device, second signaling from the terminal device, wherein the second signaling indicates that the terminal device supports a subband full duplex SBFD function; and

sending, by the network device, third signaling and fourth signaling to the terminal device, wherein the third signaling comprises second terminal device-level uplink-downlink slot configuration information, the second terminal device-level uplink-downlink slot configuration information is terminal device-level configuration information used by a terminal device supporting the SBFD function and a terminal device not supporting the SBFD function, the fourth signaling indicates a terminal device supporting the SBFD function to configure types of flexible symbols in a first slot configuration periodicity based on the third signaling or the fourth signaling indicates a terminal device supporting the SBFD function to configure types of all symbols in the first slot configuration periodicity by using a first configuration policy, the first configuration policy is an uplink-downlink slot configuration policy dedicated to a terminal device supporting the SBFD function, and the cell-level uplink-downlink slot configuration information of the first cell comprises the first slot configuration periodicity.

15. A communication apparatus, comprising:

a receiving unit, wherein the receiving unit is configured to receive first signaling and second signaling from a network device, wherein the first signaling comprises cell-level uplink-downlink slot configuration information of a first cell, the first cell is a serving cell of a terminal device, the second signaling indicates a terminal device supporting a subband full duplex SBFD function to configure types of all symbols in a first slot configuration periodicity by using the first signaling or the second signaling indicates a terminal device supporting the SBFD function to configure the types of all the symbols in the first slot configuration periodicity by using a first configuration policy, the first configuration policy is an uplink-downlink slot configuration policy dedicated to a terminal device supporting the SBFD function, and the cell-level uplink-downlink slot configuration information of the first cell comprises the first slot configuration periodicity; and

a processing unit, wherein the processing unit is configured to configure the types of all the symbols based on the first signaling when the terminal device is a terminal device not supporting the SBFD function; or

the processing unit is further configured to configure the types of all the symbols based on the second signaling when the terminal device is a terminal device supporting the SBFD function.

16. The communication apparatus according to claim 15, wherein the second signaling comprises the first configuration policy, wherein

the first configuration policy indicates to configure all the symbols in the first slot configuration periodicity as flexible symbols, or the first configuration policy is that types of all symbols in some time units in the first slot configuration periodicity are configured based on the first signaling, and that all remaining symbols in the first slot configuration periodicity are configured as flexible symbols.

17. The communication apparatus according to claim 15, wherein the second signaling comprises the first configuration policy, wherein

the first configuration policy indicates to configure all the symbols in the first slot configuration periodicity as flexible symbols; or

the first configuration policy indicates to configure types of all symbols in a last time unit in the first slot configuration periodicity based on the first signaling, and configure all remaining symbols in the first slot configuration periodicity as flexible symbols; or

the first configuration policy indicates to configure types of all symbols in a 1st time unit and a last time unit in the first slot configuration periodicity based on the first signaling, and configure all remaining symbols in the first slot configuration periodicity as flexible symbols.

18. The communication apparatus according to claim 15, wherein the second signaling comprises the first configuration policy, wherein

the first configuration policy indicates to configure all the symbols in the first slot configuration periodicity as flexible symbols; or

the first configuration policy indicates to configure all symbols in a last time unit in the first slot configuration periodicity as uplink symbols, and configure all remaining symbols in the first slot configuration periodicity as flexible symbols; or

the first configuration policy indicates to configure all symbols in a 1st time unit in the first slot configuration periodicity as downlink symbols, configure all symbols in a last time unit as uplink symbols, and configure all remaining symbols in the first slot configuration periodicity as flexible symbols.

19. The communication apparatus according to any one of claims 15 to 18, wherein the first signaling and the second signaling are carried in a system information block SIB1 message.

20. A communication apparatus, comprising:

a processing unit, wherein the processing unit is configured to determine first signaling and second signaling, wherein the first signaling comprises cell-level uplink-downlink slot configuration information of a first cell, the first cell is a serving cell of a terminal device, the second signaling indicates a terminal device supporting a subband full duplex SBFD function to configure types of all symbols in a first slot configuration periodicity by using the first signaling or the second signaling indicates a terminal device supporting the SBFD function to configure the types of all the symbols in the first slot configuration periodicity by using a first configuration policy, the first configuration policy is an uplink-downlink slot configuration policy dedicated to a terminal device supporting the SBFD function, and the cell-level uplink-downlink slot configuration information of the first cell comprises the first slot configuration periodicity; and
a sending unit, wherein the sending unit is configured to send the first signaling and the second signaling to the terminal device.

21. The communication apparatus according to claim 20, wherein the second signaling comprises the first configuration policy, wherein the first configuration policy indicates to configure all the symbols in the first slot configuration periodicity as flexible symbols, or the first configuration policy is that types of all symbols in some time units in the first slot configuration periodicity are configured based on the first signaling, and that all remaining symbols in the first slot configuration periodicity are configured as flexible symbols.

22. The communication apparatus according to claim 20, wherein the second signaling comprises the first configuration policy, wherein

the first configuration policy indicates to configure all the symbols in the first slot configuration periodicity as flexible symbols; or
the first configuration policy indicates to configure types of all symbols in a last time unit in the first slot configuration periodicity based on the first signaling, and configure all remaining symbols in the first slot configuration periodicity as flexible symbols; or
the first configuration policy indicates to configure types of all symbols in a 1st time unit and a last time unit in the first slot configuration periodicity based on the first signaling, and configure all remaining symbols in the first slot configuration periodicity as flexible symbols.

23. The communication apparatus according to claim 20, wherein the second signaling comprises the first configuration policy, wherein

the first configuration policy indicates to configure all the symbols in the first slot configuration periodicity as flexible symbols; or
the first configuration policy indicates to configure all symbols in a last time unit in the first slot configuration periodicity as uplink symbols, and configure all remaining symbols in the first slot configuration periodicity as flexible symbols; or
the first configuration policy indicates to configure all symbols in a 1st time unit in the first slot configuration periodicity as downlink symbols, configure all symbols in a last time unit as uplink symbols, and configure all remaining symbols in the first slot configuration periodicity as flexible symbols.

24. The communication apparatus according to any one of claims 20 to 23, wherein the first signaling and the second signaling are carried in a system information block SIB1 message.

25. A communication apparatus, comprising:

a receiving unit, configured to receive first signaling from a network device, wherein the first signaling comprises cell-level uplink-downlink slot configuration information of a first cell, the first cell is a serving cell of a terminal device, and the terminal device is a terminal device supporting a subband full duplex SBFD function;
a processing unit, configured to configure types of all symbols in a first slot configuration periodicity based on the first signaling, wherein the cell-level uplink-downlink slot configuration information of the first cell comprises the first slot configuration periodicity; and
a sending unit, configured to send second signaling to the network device, wherein the second signaling indicates that the terminal device supports the SBFD function, wherein
the receiving unit is further configured to receive third signaling from the network device, wherein the third signaling comprises first terminal device-level uplink-downlink slot configuration information, and the first terminal device-level uplink-downlink slot configuration information is terminal device-level configuration information dedicated to a terminal device supporting the SBFD function;

the processing unit is further configured to configure all the symbols in the first slot configuration periodicity as flexible symbols; and

the processing unit is further configured to configure the types of all the symbols based on the third signaling;

or

the receiving unit is further configured to receive third signaling from the network device, wherein the third signaling comprises second terminal device-level uplink-downlink slot configuration information, and the second terminal device-level uplink-downlink slot configuration information is terminal device-level configuration information used by a terminal device supporting the SBFD function and a terminal device not supporting the SBFD function; and

the processing unit is further configured to configure types of flexible symbols in all the symbols based on the third signaling.

26. A communication apparatus, comprising:

a sending unit, configured to send first signaling to a terminal device, wherein the first signaling comprises cell-level uplink-downlink slot configuration information of a first cell, and the first cell is a serving cell of the terminal device; and

a receiving unit, configured to receive second signaling from the terminal device, wherein the second signaling indicates that the terminal device supports an SBFD function, wherein

the sending unit is further configured to send third signaling to the terminal device, wherein the third signaling comprises first terminal device-level uplink-downlink slot configuration information, and the first terminal device-level uplink-downlink slot configuration information is configuration information dedicated to a terminal device supporting the SBFD function; or the third signaling comprises second terminal device-level uplink-downlink slot configuration information, and the second terminal device-level uplink-downlink slot configuration information is configuration information used by a terminal device supporting the SBFD function and a terminal device not supporting the SBFD function.

27. A communication apparatus, comprising:

a receiving unit, configured to receive first signaling from a network device, wherein the first signaling comprises cell-level uplink-downlink slot configuration information of a first cell, the first cell is a serving cell of a terminal device, and the terminal device is a terminal device supporting a subband full duplex SBFD function;

a processing unit, configured to configure types of all symbols in a first slot configuration periodicity based on the first signaling, wherein the cell-level uplink-downlink slot configuration information of the first cell comprises the first slot configuration periodicity; and

a sending unit, configured to send second signaling to the network device, wherein the second signaling indicates that the terminal device supports the SBFD function, wherein

the receiving unit is further configured to receive third signaling and fourth signaling from the network device, wherein the third signaling comprises second terminal device-level uplink-downlink slot configuration information, the second terminal device-level uplink-downlink slot configuration information is terminal device-level configuration information used by a terminal device supporting the SBFD function and a terminal device not supporting the SBFD function, the fourth signaling indicates a terminal device supporting the SBFD function to configure types of flexible symbols in all the symbols based on the third signaling or the fourth signaling indicates a terminal device supporting the SBFD function to configure the types of all the symbols by using a first configuration policy, and the first configuration policy is an uplink-downlink slot configuration policy dedicated to a terminal device supporting the SBFD function; and

the processing unit is further configured to configure types of all or some symbols in all the symbols based on the fourth signaling.

28. A communication apparatus, comprising:

a sending unit, configured to send first signaling to a terminal device, wherein the first signaling comprises cell-level uplink-downlink slot configuration information of a first cell, and the first cell is a serving cell of the terminal device; and

a receiving unit, configured to receive second signaling from the terminal device, wherein the second signaling indicates that the terminal device supports a subband full duplex SBFD function, wherein

the sending unit is further configured to send third signaling and fourth signaling to the terminal device, wherein the third signaling comprises second terminal device-level uplink-downlink slot configuration information, the second terminal device-level uplink-downlink slot configuration information is terminal device-level configuration information used by a terminal device supporting the SBFD function and a terminal device not supporting the SBFD function, the fourth signaling indicates a terminal device supporting the SBFD function to configure types of flexible symbols in all symbols in a first slot configuration periodicity based on the third signaling or the fourth signaling indicates a terminal device supporting the SBFD function to configure types of all the symbols by using a first configuration policy, the first configuration policy is an uplink-downlink slot configuration policy dedicated to a terminal device supporting the SBFD function, and the cell-level uplink-downlink slot configuration information of the first cell comprises the first slot configuration periodicity.

29. A communication apparatus, wherein the communication apparatus comprises at least one processor and at least one memory, the at least one memory is configured to store a computer program or instructions, and the at least one processor is configured to execute the computer program or the instructions in the memory, to enable the method according to any one of claims 1 to 5, or the method according to any one of claims 6 to 10, or the method according to claim 11 or 12, or the method according to claim 13 or 14 to be performed.

30. A computer-readable storage medium, wherein the computer-readable storage medium stores computer instructions, and when the computer instructions are run on a computer, the method according to any one of claims 1 to 5, the method according to any one of claims 6 to 10, the method according to claim 11 or 12, or the method according to claim 13 or 14 is performed.

31. A computer program product, wherein the computer program product comprises computer program code, and when the computer program code is run on a computer, the method according to any one of claims 1 to 5, the method according to any one of claims 6 to 10, the method according to claim 11 or 12, or the method according to claim 13 or 14 is performed.

EP 4 564 968 A1

FIG. 1

FIG. 2

Frequency
domain

Time-frequency
resources for downlink
transmission

Time-frequency
resources for uplink
transmission

X    X    X    X    X

Time
domain

(a)

Frequency
domain

Time-frequency
resources for downlink
transmission

Time-frequency
resources for uplink
transmission

X    X    X    X    U

Time
domain

(b)

Frequency
domain

Time-frequency
resources for downlink
transmission

Time-frequency
resources for uplink
transmission

D    X    X    X    U

Time
domain

(c)

FIG. 3

```
 ┌─────────────────────┐              ┌─────────────────────┐
 │   Network device    │              │   Terminal device   │
 └─────────────────────┘              └─────────────────────┘
```

S410: Generate first signaling
and second signaling

S420: First signaling
and second signaling

S430: Determine types of all symbols
in a first slot configuration periodicity
based on the first signaling and/or the
second signaling

S440: Third signaling

S450: Fourth signaling

S460: Fifth signaling

S470: First uplink signal

S480: Sixth signaling

S490: First downlink signal

FIG. 4

```
┌─────────────────┐                              ┌─────────────────┐
│ Network device  │                              │ Terminal device │
└────────┬────────┘                              └────────┬────────┘
         │────────── S510: First signaling ──────────▶│
         │                                             │
         │                          ┌──────────────────┴──────────────────┐
         │                          │ S520: Configure types of all symbols │
         │                          │  in a first slot configuration       │
         │                          │  periodicity based on the first      │
         │                          │  signaling                           │
         │                          └──────────────────┬──────────────────┘
         │◀───────── S530: Second signaling ───────────│
         │                                             │
         │────────── S540: Third signaling ──────────▶│
         │                                             │
         │                          ┌──────────────────┴──────────────────┐
         │                          │ S550: Configure all the symbols in   │
         │                          │  the first slot configuration        │
         │                          │  periodicity as flexible symbols     │
         │                          └──────────────────┬──────────────────┘
         │                          ┌──────────────────┴──────────────────┐
         │                          │ S560: Configure the types of all the │
         │                          │  symbols in the first slot           │
         │                          │  configuration periodicity based on  │
         │                          │  the third signaling                 │
         │                          └──────────────────┬──────────────────┘
         │                                             │
```

FIG. 5

```
┌─────────────────┐                              ┌─────────────────┐
│ Network device  │                              │ Terminal device │
└────────┬────────┘                              └────────┬────────┘
         │────────── S610: First signaling ──────────▶│
         │                                             │
         │                          ┌──────────────────┴──────────────────┐
         │                          │ S620: Configure types of all symbols │
         │                          │  in a first slot configuration       │
         │                          │  periodicity based on the first      │
         │                          │  signaling                           │
         │                          └──────────────────┬──────────────────┘
         │◀───────── S630: Second signaling ───────────│
         │                                             │
         │─── S640: Third signaling and fourth ──────▶│
         │        signaling                            │
         │                          ┌──────────────────┴──────────────────┐
         │                          │ S650: Determine types of all or some │
         │                          │  symbols in the first slot           │
         │                          │  configuration periodicity based on  │
         │                          │  the third signaling and/or the      │
         │                          │  fourth signaling                    │
         │                          └──────────────────┬──────────────────┘
         │                                             │
```

FIG. 6

Communication apparatus 200

Communication unit 210

Processing unit 220

FIG. 7

Communication apparatus 300

Processor
310

Memory
330

Transceiver
320

FIG. 8

## INTERNATIONAL SEARCH REPORT

| International application No. |
| --- |
| **PCT/CN2023/112286** |

**A. CLASSIFICATION OF SUBJECT MATTER**

H04W72/04(2023.01)i

According to International Patent Classification (IPC) or to both national classification and IPC

**B. FIELDS SEARCHED**

Minimum documentation searched (classification system followed by classification symbols)

IPC: H04W H04Q

Documentation searched other than minimum documentation to the extent that such documents are included in the fields searched

Electronic data base consulted during the international search (name of data base and, where practicable, search terms used)

CNTXT; ENTXT; VCN; 3GPP: 子带全双工, 配置, 时隙, 公共, 专用, 支持, 灵活, 上行, 下行, SBFD, configuration, slot, common, dedicated, support, flexible, uplink, downlink, capable, legacy, UE

**C. DOCUMENTS CONSIDERED TO BE RELEVANT**

| Category* | Citation of document, with indication, where appropriate, of the relevant passages | Relevant to claim No. |
| --- | --- | --- |
| A | MODERATOR(CATT). "Summary #1 of [109-e-R18-Duplex-03] Email discussion on subband non-overlapping full duplex" *3GPP TSG RAN WG1 #109-e R1-220xxxx*, 16 May 2022 (2022-05-16), section 3 | 1-31 |
| A | SAMSUNG. "Subband non-overlapping full duplex for NR duplex evolution" *3GPP TSG-RAN WG1 Meeting #109-e R1-2203904*, 20 May 2022 (2022-05-20), entire document | 1-31 |
| A | CN 114600390 A (QUALCOMM INC.) 07 June 2022 (2022-06-07) entire document | 1-31 |
| A | US 2021377938 A1 (QUALCOMM INC.) 02 December 2021 (2021-12-02) entire document | 1-31 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 October 2023** | **23 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

EP 4 564 968 A1

## INTERNATIONAL SEARCH REPORT
### Information on patent family members

International application No.

**PCT/CN2023/112286**

| Patent document cited in search report | | | Publication date (day/month/year) | Patent family member(s) | | | Publication date (day/month/year) |
|---|---|---|---|---|---|---|---|
| CN | 114600390 | A | 07 June 2022 | US | 2021135833 | A1 | 06 May 2021 |
| | | | | WO | 2021087484 | A1 | 06 May 2021 |
| | | | | EP | 4052386 | A1 | 07 September 2022 |
| | | | | IN | 202247019941 | A | 06 May 2022 |
| US | 2021377938 | A1 | 02 December 2021 | EP | 4158834 | A1 | 05 April 2023 |
| | | | | WO | 2021242931 | A1 | 02 December 2021 |
| | | | | TW | 202147902 | A | 16 December 2021 |
| | | | | IN | 202247055962 | A | 21 October 2022 |
| | | | | CN | 115398850 | A | 25 November 2022 |

Form PCT/ISA/210 (patent family annex) (July 2022)

**REFERENCES CITED IN THE DESCRIPTION**

**Patent documents cited in the description**

- CN 202210970215